# EUROPEAN PATENT APPLICATION

(11) **EP 4 478 327 A1**
(43) Date of publication of application: **18.12.2024**
(21) Application number: 24153558.2
(22) Date of filing: 23.01.2024
(51) Int. Cl.: G08G 1/01, B62J 43/30, B62J 45/00, B62J 45/20, B62J 50/22, B62J 50/21, G08G 1/017, G08G 1/04, G08G 1/052, G08G 1/14

(54) **AI VEHICLE WITH ITS CONTROL SYSTEM**

(30) Priority: 15.06.2023 TW 112122342; 20.12.2023 TW 112149685; 20.12.2023 TW 112149686
(71) Applicant: Powershow Limited, New Taipei City 241 (TW)
(72) Inventor: SHEN, Yu-Chih, New Taipei City (TW); FUH, Chiou-Shann, New Paipei City (TW); YU, Pei-Jing, New Taipei City (TW); SUN, Yu, New Taipei City (TW); TSENG, Chi-Ting, New Taipei City (TW); SHEN, Hsiu-Hua, New Taipei City (TW); HUANG, Kun-Ci, New Taipei City (TW); PAN, Tsai-Ying, New Taipei City (TW); HUANG, Chi-Hsuan, New Taipei City (TW)
(74) Representative: Lang, Christian

(57) **Abstract**

The present invention is an AI vehicle with its control system, which comprises a motorcycle or an automobile, an AI device, a first image acquisition device, a second image acquisition device, a display device, a heat dissipation device, a power supply management device, and a three-button control switch, which may be mounted on a regular motorcycle for control of license plate image acquisition, plate detection, computation control of license plate number recognition, and control of power supply management, to achieve effects of license plate number recognition and active detection when the AI motorcycle is ridden for patrol, thus achieve effects of better investigation and crime prevention mobility as well as investigation and crime prevention immediacy. Further, the AI vehicle with two additional image acquisition devices arranged therein may acquire license plate number and parking information, followed by being uploaded to a roadside parking billing computing center for calculating parking fees to achieve the effect for roadside parking billing and tolling.

## Description

### BACKGROUND OF THE INVENTION

### Field of the Invention

The present invention relates to an AI (artificial intelligence) vehicle with its control system, especially to a control system for an AI vehicle that may be mounted on a vehicle and capabable of license plate recognition and active detection when riding the motorcycle on patrol, such that the effects of better investigation and crime prevention mobility as well as investigation and crime prevention immediacy are achieved. Further, the license plate number and parking information of vehicles parked in roadside parking spaces may be acquired by the AI vehicle for calculating parking fees.

### Descriptions of the Related Art

When a police officer is on patrol duty, a motorcycle is usually ridden. Once a person who behaves or seems to behave as a law violator is found, the person is stopped for interrogation. Such stopping for interrogation is time-consuming, therefore the aforementioned shortcoming may be avoided effectively if a way of scientific and technological enforcement is introduced in patrol conducted by the police officer. Moreover, the effects of investigation and crime prevention mobility as well as investigation and prevention immediacy are available in an active enforcement.

In the present invention, a movable AI vehicle capable of multi-functional smart investigation and crime prevention is developed for overcome shortcomings of a number of types of conventional police motorcycles. On the AI motorcycle, apparatus such as AI computer, camera and the like are installed, which, when in patrolling, may conduct license plate number recognition in real time for a license plate in relative movement or a vehicle on roadside parking with respect to a license plate of a stolen vehicle or a vehicle alert for suspect person. Also, a face recognition software may be installed on the AI computer. A portable and wireless camera device or a smartphone is equipped by a police officer on duty to conduct a real-time face recognition by means of transmitting an image to the AI computer of the motorcycle within a range capable of receiving a signal in order to apply an active detection and protect the officer conducting law enforcement with an immediate recognition and alert for a suspect person. Also, a portable camera is used to develop an algorithm capable of analyzing image recognition with respect to identification of a physiological phenomenon due to drinking for discriminating a person under alcoholic detection. Moreover, a radar speedometer equipment may be installed on the motorcycle, which, in combination with a license plate recognition function of an on-board AI computer, provides an alert for an overspeed vehicle at a certain spot, as well as in combination with information stored in a cloud vehicle database, provides a kind reminder via a real-time SMS (Short Message Service) text on a mobile phone for the driver whose vehicle is overspeed in order for reducing as more casualties due to overspeed vehicles as possible to achieve the goal of a friendly city.

### SUMMARY OF THE INVENTION

The major objective of the present invention is to overcome the current vehicle of conventional shortcomings mentioned above, such that at least a camera, an AI computer may be mounted on a regular motorcycle or automobible in order to have the abilieies of license plate number recognition, active detection when riding the motorcycle or driving the automobile on patrol, and achieve the effects of better investigation and crime prevention mobility as well as investigation and crime prevention immediacy.

For the purpose mentioned above, the present invention provides a control system for an AI motorcycle including: a motorcycle provided with a battery for motorcycle activation, an AI device electrically connected to the battery for motorcycle activation, a first image acquisition device electrically connected to the AI device, a second image acquisition device electrically connected to the AI device, a display device electrically connected to the AI device, a heat dissipation device electrically connected to the AI device, and a power supply management device electrically connected to the AI device. The AI device and the heat dissipation device are provided in an accommodation cabin of the motorcycle, the first image acquisition device and the second image acquisition device are installed on both left and right side of a head of the motorcycle respectively, the display device is provided over a dashboard on the head of the motorcycle; the power supply management device is installed in a rear container to at least executes a step of turning on the AI device, a step of turning off the AI device, and a step of charging the battery for motorcycle activation; in executing the step of turning on the AI device, a motorcycle electric switch provided with the battery for motorcycle activation is turned on, and a reset switch of the power supply management device is activated to turn on the battery for motorcycle activation to output power to the AI device, the first image acquisition device, the second image acquisition device, the display device and the heat dissipation device, as well as a boot process and a system screen are displayed on the display device to complete the turning on of the AI device; in executing the step of turning off the AI device, the motorcycle electric switch is turned off, and the AI device enters a shutdown process, after the display device displays that the shutdown is complete, the reset switch is activated until no output screen being displayed on the display device, indicating that the shutdown of the AI device is completed; in executing the step of charging the battery for motorcycle activation, a charging selection switch of the power supply management device is activated to a position of a vehicle charging side, such that the power supply management device receives the power of the motorcycle generator of the AI motorcycle to powering for an input terminal of the power supply management device as charging of the battery for motorcycle activation, and supply the power directly or indirectly required for the AI device, the first image acquisition device, the second image acquisition device, the display device and the heat dissipation device to operate; in addition, the charging selection switch of the power supply management device can also be activated to a position of an external charging side, such that a bluetooth communication charger of the power supply management device receives AC power from an external power source as the charging of the battery for motorcycle activation, to supply the power directly or indirectly required for the AI device, the first image acquisition device, the second image acquisition device, the display device and the heat dissipation device to operate.

In the present invention, another control system for the AI motorcycle is provided, including: a motorcycle; an AI device provided in an accommodation cabin of the motorcycle; a first image acquisition device, which is electrically connected to the AI device, the first image acquisition device comprising a first image acquisition card , the first image acquisition card being installed on a head of the motorcycle, the first image acquisition card being electrically connected with the first image acquisition device through a coaxial cable transmission signal by an analog image signal input terminal, such that a digital image signal output terminal of the first image acquisition device is electrically connected with the AI device by signal transmission through a wire; a second image acquisition device, which is electrically connected to the AI device, the second image acquisition device comprising a second image acquisition card, the second image acquisition card being installed on a head of the motorcycle, the second image acquisition card being electrically connected with the second image acquisition device through a coaxial cable transmission signal by an analog image signal input terminal, such that a digital image signal output terminal of the second image acquisition device is electrically connected with the AI device by signal transmission through a wire; a display device, which is electrically connected to the AI device, the display device comprising an image A/D PCB board/touch control panel, the display device being provided over a dashboard of the head, the image A/D PCB board/touch control panel being provided in the accommodation cabin, the image A/D PCB board/touch control panel being electrically connected to the display device through a bonding line; a wireless network bridge (router), which is electrically connected to the AI device through a RJ45 port network line, or a casing of the AI device having a built-in 5G Wifi network module therein connecting to an antenna pedestal of a computer casing followed by guiding to an exterior of a vehicle body as a point-to-point wireless connection between the AI device and an external equipment; a radar speedometer module, which is electrically connected to the AI device and provided in a rear container of the motorcycle, the radar speedometer module being connected with a RS485 port of the AI device through a UPT signal line, or can be connected with a RS232 port of the AI device via a RS485/RS232 converter, or can be connected with a USB port of the AI device via a RS485/USB converter, the radar speedometer module being capable of cooperating with plate number recognition functions of the image acquisition devices to calculate a speed of each traveling vehicle and a matched plate number in real time by means of an image analysis algorithm when the AI motorcycle is on roadside parking; a RFID active receiver, which is electrically connected to the AI device and provided on a head of the motorcycle, the RFID active receiver being connected with a RS485 port of the AI device through a UPT signal line, or can be connected with a RS232 port of the AI device via a RS485/RS232 converter, or can be connected with a USB port of the AI device via a RS485/USB converter, and the RFID active receiver can conduct receiving for ETC/eTag chips on parked vehicles with respect to roadside parking billing when the motorcycle is traveling, and cooperate with plate number recognition functions of the image acquisition devices to calculate a speed of each traveling vehicle and a matched plate number in real time by means of an image analysis algorithm.

In the present invention, a license plate number recognition control system for an AI motorcycle is provided further, including: a motorcycle provided with a battery for motorcycle activation, an AI device electrically connected to the battery for motorcycle activation, a first image acquisition device electrically connected to the AI device, a second image acquisition device electrically connected to the AI device, the AI device being provided in an accommodation cabin of the motorcycle, the first image acquisition device and the second image acquisition device being installed on both left and right side of a head of the motorcycle respectively; the AI device cooperating with the first image acquisition device and the second image acquisition device to perform a computation of a license plate number recognition; and the computation of the license plate number recognition including at least the following steps:
Step 1: plate image input, in which at least one license plate image is obtained from the first image acquisition device and the second image acquisition device at first and input to the AI device.
Step 2: plate detection, in which a position, a size of a plate frame and an inclination angle of characters of a plate in the plate image are detected based on a neural network plate detection algorithm, and the detected plate is cut out from the plate image.
Step 3: rotation correction, in which the inclination classification angle of characters on the plate is determined according to the step 2 to perform the rotation correction for the plate in the plate image, such that texts on the plate do not overlap as much as possible in a horizontal alignment.
Step 4: plate number recognition, in which the plate image after the rotation correction is input into a licese plate recognition algorithm of a plate identification neural network to recognize the plate number.

In the control system for the AI motorcycle mentioned above, the motorcycle electric switch is further electrically connected with at least a protection device, a motorcycle power load, a motorcycle voltage and current regulation device, and the motorcycle generator is electrically connected to the motorcycle voltage and current regulation device.

In the control system for the AI motorcycle mentioned above, the AI device is further electrically connected with a radar speedometer module and a wireless network bridge (router) or the AI device has a built-in 5G Wifi module.

In the control system of the AI motorcycle mentioned above, the wireless network bridge (router) or the AI device 20 has a built-in 5G Wifi module as a wireless connection between the AI device and other external equipment.

In the control system for the AI motorcycle mentioned above, the AI device is electrically connected to a temperature and voltage detection device, the temperature and voltage detection device can conduct a two-way communication with the AI device through a USB port and an interface software, and the temperature and voltage detection device detects the temperature/voltage/current values of the first image acquisition device, the second image acquisition device, and the display device for comparison with safety values by the AI device, and in turn, air intake and air exhausting of the heat dissipation device are driven, such that the computer cabin forms a strong convection to lower down the temperature.

In the control system for the AI motorcycle mentioned above, the AI device is electrically connected with a horn/buzzer, the horn/buzzer being provided on the display device, a trigger/signal amplification function of the horn/buzzer being connected with an amplifier embedded in an image A/D PCB board/touch control panel through a signal control cable for actuation, and the horn/buzzer being connected to a GPIO/RS232 adapter socket of the AI device through a UTP signal line, or connected to the buzzer by a horn hole line of the AI device, and having timing of a reporting mechanism controlled by the AI device.

In the control system for the AI motorcycle mentioned above, a digital image signal output terminal of the first image acquisition device is electrically connected with the AI device by signal transmission through a USB3.0 wire, and a digital image signal output terminal of the second image acquisition device is electrically connected with the AI device by signal transmission through a USB3.0 wire.

In the control system for the AI motorcycle mentioned above, the AI device is electrically connected with a three-button control switch, the three-button control switch being provided on a handle of the motorcycle, and electrically connected with the AI device through a control line, the three-button control switch being a single-circuit switch, and the control panel of the three-button control switch being provided in the AI device with a USB port, a first button switch of the three-button control switch control temporary cutting of powering or cutting of powering for the display device by the AI device; a second button switch of the three-button control switch activating a slow shutdown program initiated by the AI device; a third button switch of the three-button control switch controlling the first image acquisition device and the second image acquisition device initiated by the AI device.

In a further plate number recognition control system for the AI motorcycle mentioned above, a separable convolution can be performed for depths of the plate detection algorithm of the neural network in the step 2, to characterize the plate in the plate image from 512 by 512 to a smaller size gradually, and a prediction is performed for six of these depths through a prediction layer.

In a further plate number recognition control system for the AI motorcycle mentioned above, a size of the first prediction layer is 32 by 32, a size of the second prediction layer is 16 by 16, a size of the third prediction layer is 8 by 8, a size of the fourth prediction layer is 4 by 4, a size of the fifth prediction layer is 2 by 2, a size of the sixth prediction layer is 1 by 1, and location and inclination angle classification of the plate in the plate image are obtained for cutting from a scene according to coordinates and rotation correction to complete preprocessing of plate number recognition.

In a further plate number recognition control system for the AI motorcycle mentioned above, the rotation angles in the step 2 are divided into 8 categories, in which two groups are from 0 degree to 10 degrees from left to right, two groups are from 10 degrees to 20 degrees from left to right, two groups are from 20 degrees to 30 degrees from left to right, and two groups are above 30 degrees from left to right, respectively, to cut the detected plate out of the plate image.

For the major purpose of the present invention, an AI motorcycle with its control system thereof are provided, the AI motorcycle including a motorcycle provided with a battery for motorcycle activation, an AI device, a first image acquisition device, a second image acquisition device, a display device, a heat dissipation device, a power supply management device and a three-button control switch; wherein a power supply and power control system of the AI motorcycle includes the power supply management device charged by a motorcycle generator or an external power source, the power supply management device being electrically connected to the AI device and the heat dissipation device, the first image acquisition device, the second image acquisition device, the display device and the three-button control switch being electrically connected to the AI device, to provide a power required for operations of the devices by the power supply management device.

For another major purpose of the present invention, an AI motorcycle with its control system thereof are provided, an image and micro-control signal system of the AI motorcycle including an AI device, which is connected to the first image acquisition device, the second image acquisition device, the display device, the three-button control switch and the power supply management device by signal lines to transmit information and control operations of the devices.

The AI motorcycle with its control system thereof according to the present invention are characterized in that, as a step of turning on the AI device is executed, a motorcycle power switch provided for the battery for motorcycle activation is switched on, and a reset switch of the power supply management device is activated, for outputting power to the AI device; as a step of turning off the AI device is executed, the motorcycle power switch is switched off, and the AI device enters a shutdown process for activating the reset switch after the display device displays that the shutdown is complete to accomplish the turning-off of the AI device.

Another feature for the AI motorcycle with its control system thereof according to the present invention is in that, an active recognition control system of the AI motorcycle has a Wifi AP antenna mounted on the AI motorcycle, linking to a smart mobile phone or a pair of smart glasses in a manner of wireless communication for transmission of plate images and face images acquired by the equipments to the AI device, to perform a license plate number recognition or a face recognition, followed by returning recognition results to the smart mobile phone or the pair of smart glasses; and the following steps run: the smart mobile phone is operated to connect to the Wifi AP antenna disposed on the motorcycle; at least one license plate or face image is obtained from a camera of a mobile phone or a pair of smart glasses, and information is returned via a link of the Wifi AP antenna as an input to the AI device; the input image is recognized by the AI device; the image recognition result is subject to information returning via the link of the Wifi AP antenna by the AI device for input to the smart mobile phone or the pair of smart glasses and display of the result.

A secondary feature for the AI motorcycle with its control system thereof to the present invention is in that, the AI device is linked to a remote database for information update; the AI device is connected to a public network or an optical fiber network of a government department through a WAP with a network of an ISP telecommunication base for login to, for example, a police cloud database system to update relevant recognition information; the AI device is connected to a network HUB through a wireless network for connection to a police database terminal for updating relevant recognition information; the AI device can further have a 4G/5G communication module disposed, thereby a wireless base station of regional telecommunication operator is connected through 4G/5G communication, further, a public network or an optical fiber network of a government department is connected with a data network for login to a police cloud database system to update relevant recognition information; the AI device is provided with a scratch pad memory, as well as a software storage hard disk and a data storage hard disk, by which installation for program running is available and recognition images are stored.

Moreover, another AI motorcycle with its control system thereof according to the present invention are provided, the AI motorcycle having a first image acquisition device disposed on a right side of a head of the motorcycle for acquiring an image of a rear plate of a vehicle on the right side; having a second image acquisition device disposed on a left side of the head of the motorcycle for acquiring an image of a rear plate of a vehicle on the left side; having a third image acguisition device disposed on a right side rear end of an accommodation cabin of the motorcycle for acquiring an image of a front plate of the vehicle on the right side; having a fourth image acguisition device disposed on a left side rear end of the accommodation container of the motorcycle for acquiring an image of a front plate of the vehicle on the left side.

The present invention provides an AI motorcycle for roadside parking billing, which includes: a motorcycle, an AI device, a first image acquisition device, a second image acquisition device, a third image acquisition, a fourth image acquisition device, a display device, a power supply management device, a Wifi AP antenna, a three-button control switch and a right/left camera switch. The first image acquisition device is disposed on a right side front end of a head of the motorcycle. The second image acquisition device is disposed on a left side front end of the head of the motorcycle. The third image acquisition device is disposed on a right side rear end of an accommodation cabin. The fourth image acquisition device is disposed on a left side rear end of the accommodation cabin. When the AI motorcycle is traveling, the first image acquisition device may acquire a rear plate image of a vehicle in a parking space on a right side, the third image acquisition device may acquire a front plate image of the vehicle in the parking space on the right side, while the second image acquisition device may acquire a rear plate image of a vehicle in a parking space on a left side, the fourth image acquisition device may acquire a front plate image of the vehicle in the parking space on the left side.

In the AI motorcycle for roadside parking billing mentioned above, the AI (Artificial Intelligence) device is disposed in an accommodation cabin. The AI device is an Nvidia GPU card or Intel VPU card for high-speed image calculation installed in an industrial computer. The accommodation cabin has an air inlet on left/right sides thereof, respectively. Those image acquisition device have a camera and a spotlight, respectively. The display device is disposed at a location on a head of the motorcycle. The power supply management device is disposed in a rear container of the motorcycle. The power supply management device is provided with a power switch, a waterproof power charging seat, multiple air exhaust based heat dissipation fans and at least one suction based heat dissipation fan. The Wifi AP antenna is disposed on a top surface of a housing of the power supply management device. The three-button control switch is disposed on a lower side of a left grip of the motorcycle. The left/right camera switch is disposed at a lower left location of the head of the motorcycle with an AI system power button provided at a location adjacent thereto. The head of the AI motorcycle is further provided with a rectifying voltage regulator, an embedded buzzer. The AI device, the first image acquisition device, the second image acquisition device, the third image acquisition, the fourth image acquisition, the display device, the power supply management device, the Wifi AP antenna, the three-button control switch and the right/left camera switch are electrically connected with each other.

In the AI motorcycle for roadside parking billing mentioned above, the AI device comprises a processing unit, a first image recognition unit, a second image recognition unit, a first vehicle and license plate database, a second vehicle and licerse plate database, a comparison unit, a parking information database, a wireless transmission output unit, a voltage regulation unit and a temperature control module. In an operation, the rear plate image and the vehicle body image of the vehicle in the parking space on the right side are acquired by the first image acquisition device, then input into the first image recognition unit, followed by outputting the rear plate number and a vehicle model to the first vehicle and license plate database. Next, a front plate image and a vehicle body image of the vehicle in the parking space on the right side are acquired by the second image acquisition device, and then input into the second image recognition unit, followed by outputting the front plate number and a vehicle model to the second vehicle and license plate database. Afterwards, the rear plate number and the front plate number as well as the vehicle models of the same car are input into the comparison unit by the vehicle and license plate databases. If the two plate numbers and the quantities are consistent from comparison, the parking information data of plate number is input together with other parking information (parking unit number, parking space longitude/latitude, vehicle entry time, exit time, parking duration), followed by being input into a wireless transmission output unit, and uploaded to a roadside parking billing computing center by the wireless transmission output unit having a 4G/5G SIM card in a manner of wireless communication for billing computing of the parking fee. If the front, rear plate numbers or the quantities are inconsistent from a comparison result, the processing unit performs the processing of an algorithm for plate number correction or the processing of an algorithm for quantity correction, followed by input into the parking information database. Furthermore, the same procedure applies for a plate recognition operation for the parking spaces on the left side.

In the AI motorcycle for roadside parking billing mentioned above, the first image acquisition device is disposed in a forward direction with a right deflection angle of 45°, the second image acquisition device is disposed in a forward direction with a left deflection angle of 45°, the third image acquisition device is disposed in a rearward direction with a left deflection angle of 45°, the fourth image acquisition device is disposed in a rearward direction with a right deflection angle of 45°. The three-button control switch has a first control button for controlling the power of the image acquisition device or acquiring the input of images, a second control button for controlling the display device, a third control button for controlling the AI device. The left/right camera switch may only activate the front, rear camera sets on the right side or the left side based on single-side or two-side disposition of parking spaces for roadside parking spaces.

In the AI motorcycle for roadside parking billing mentioned above, the voltage regulation unit, which is connected to the rectifying voltage regulator, may regulate the power supply management device for output of an appropriate voltage; the temperature control module, which is connected to the air exhaust based heat dissipation fans and suction based heat dissipation fan, may detect and regulate the temperature of the accommodation cabin.

Another major objective of the present invention is to provide a plate recognition software system for roadside parking. The procedure of plate recognition operation is as follows: (1) Determine whether it is in a recognition mode; (2) If the determination is Yes, then a real-time image is input; (3) An object detection mode is performed; (4) A plate number recognition mode is performed; (5) Vehicle models and plate numbers are output; (6) The front, rear plate numbers are compared for consistency; (7) If the comparison result is No, then an algorithm is employed to correct the plate numbers; (8) Errors are detected manually; (9) Storage into a parking information database is performed; (10) If the comparison result is Yes, then whether the quantity of vehicles is consistent with the quantity of plates is determined; (11) If the determination is No, then an algorithm is performed to correct the quantities; (12) Errors are detected manually; if the determination is Yes in the step (10), then storage into the parking information database is performed; (13) If the determination is No in the step (1), then whether to turn off the plate recognition operation is subject to a choice; (14) If the choice is Yes, then the plate recognition operation is ended.

The AI motorcycle for roadside parking billing according to the present invention operates cooperatively with a roadside parking billing platform to upload parking information comprising plate numbers to a roadside parking billing computing center through a wireless communication network for the plate numbers acquired by the AI motorcycle and the parking information. After parking fees are calculated by a parking fee calculation module, parking fee information is transmitted to users. Furthermore, the vehicles in roadside parking according to the present invention may be cars or motorcycles, the roadside parking spaces may be car parking spaces or motorcycle parking spaces, the parking billing time interval may be every hour, every half hour, or every count of calculation.

As mentioned above, with the AI motorcycle for roadside parking billing according to the present invention, the plate numbers acquired by the AI motorcycle and the parking information may be uploaded to a parking space database module of a roadside parking billing computing center via a wireless communication network, and parking fees are calculated by a parking fee calculation module, followed by having the parking fee information sent to users by a query and issuance module, thereby achieving practical application and economic benefits of roadside parking billing and tolling.

Further, the present invention may operate cooperatively with a parking space management platform for uploading the parking information stored by the AI motorcycle to a parking space database module of a parking space management platform, and real-time free parking space information is recorded, provided to drivers with real-time transmission for quick query of available roadside parking spaces by a parking space management computing module.

Moreover, the AI vehicle for roadside parking billing according to the present invention may be an automible, which includes: a car, an AI device, a first image acquisition device, a second image acquisition device, a third image acquisition device, a fourth image acquisition device, a display device, a power supply management device and an three-button control switch. The AI device, the first image acquisition device, the second image acquisition device, the third image acquisition device, the fourth image acquisition device, the display device, the power supply management device and the three-button control switch are electrically connected with each other.

### BRIEF DESCRIPTION OF THE DRAWINGS

Figure 1 is a schematic diagram showing blocks of control system according to a first embodiment of the present invention.
Figure 2 is a schematic diagram showing blocks of another control system according to the first embodiment of the present invention.
Figure 3 is a schematic diagram showing a three-dimensional stereograph of an AI motorcycle according to the present invention.
Figure 4 is a schematic diagram showing a flow chart of a license plate number recognition control system according to the embodiment of the present invention.
Figure 5 is a flow chart showing a license plate number recognition algorithm according to the present invention.
Figure 6 is a classification diagram showing inclination angles of license plate images according to the present invention.
Figure 7 is a network architecture diagram showing a license plate detection algorithm according to the present invention.
Figure 8 shows a prediction layer in the network architecture of Figure 7.
Figure 9 is a network architecture diagram showing a license plate number recognition algorithm according to the present invention.
Figure 10 is a basic block diagram in Figure 9.
Figure 11 is a block diagram showing power supply and control lines of an AI motorcycle control system according to the present invention;
Figure 12 is a flow chart showing an ACC booting/shutdown process flow of the AI motorcycle control system according to the present invention;
Figure 13 is a block diagram showing image signal and micro-control lines of the AI motorcycle control system according to the present invention;
Figure 14 is a schematic diagram showing image information transmission for an active recognition control system of an AI motorcycle according to the present invention;
Figure 15 is a step diagram showing license plate number recognition information transmission for the active recognition control system of the AI motorcycle according to the present invention;
Figure 16 is a schematic diagram showing a process of face image recognition for the active recognition control system of the AI motorcycle according to the present invention;
Figure 17 is a schematic diagram showing communication links between the AI motorcycle according to the present invention and a remote database;
Figure 18 is a diagram showing a three-dimensional appearance of an AI motorcycle for roadside parking billing according to a second embodiment of the present invention.
Figure 19 is a diagram showing another three-dimensional appearance of the AI motorcycle for roadside parking billing according to the second embodiment of the present invention.
Figure 20 is a schematic diagram showing structural blocks of an AI device according to the present invention.
Figure 21 is a schematic diagram showing acquisition for plate images of a vehicle in a roadside parking space according to the present invention.
Figure 22 is a flow chart showing an operation of license plate recognition software according to the present invention.
Figure 23 is a schematic diagram showing blocks for a roadside parking billing platform system according to the present invention.
Figure 24 is a schematic diagram of a top view showing components of an AI automobible for roadside parking billing according to a third embodiment of the present invention.

### DETAILED DESCRIPTION OF THE PREFERRED EMBODIMENT

### First Embodiment

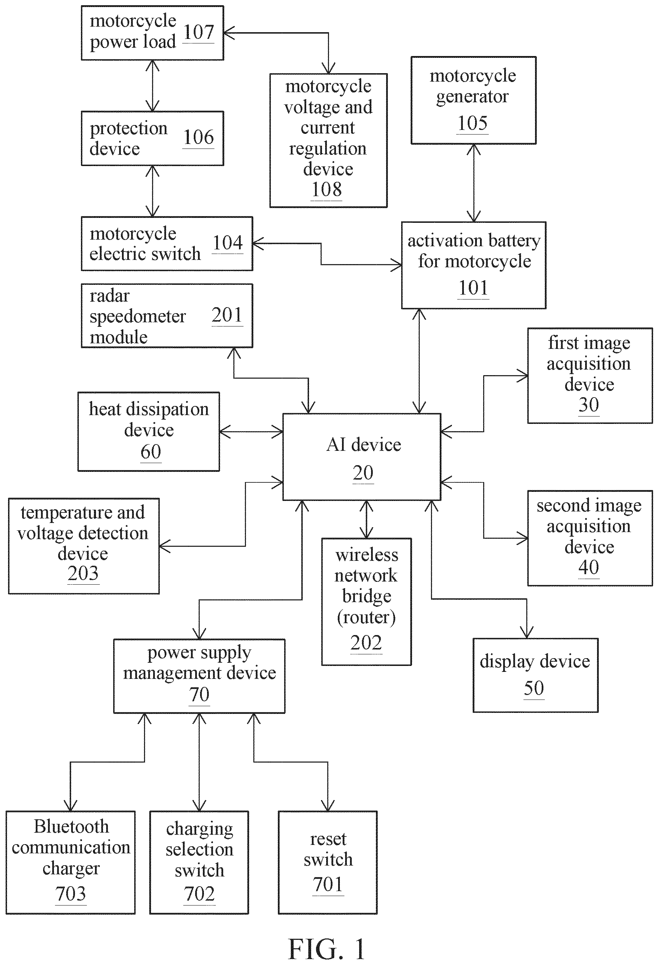

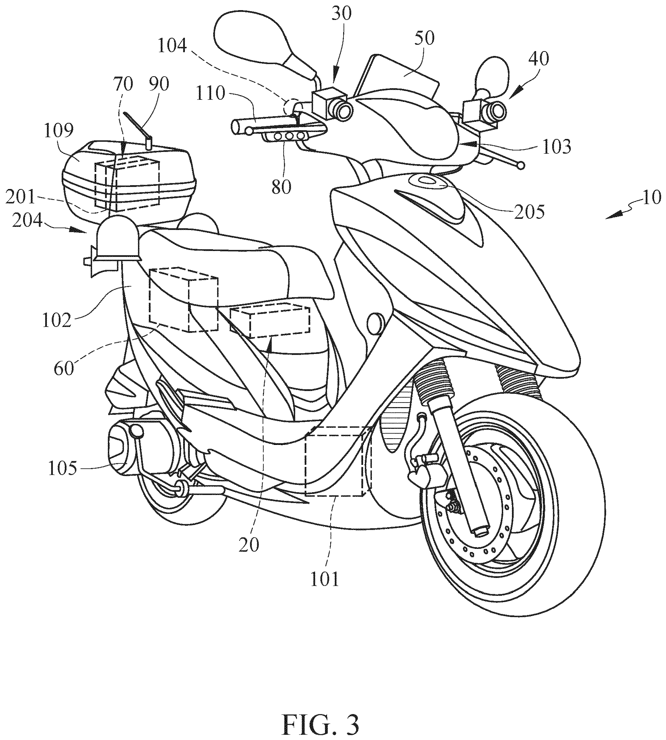

Refer to Figure 3 and Figure 1, which are a schematic diagram showing a three-dimensional stereograph according to a first embodiment of the present invention and a schematic diagram showing control system blocks according to the first embodiment of the present invention, respectively. As shown in the figures, the present invention is a control system for an AI motorcycle including: a motorcycle 10 provided with a battery for motorcycle activation 101, an AI device 20 electrically connected to the battery for motorcycle activation 101, a first image acquisition device 30 electrically connected to the AI device 20, a second image acquisition device 40 electrically connected to the AI device 20, a display device 50 electrically connected to the AI device 20, a heat dissipation device 60 electrically connected to the AI device 20, and a power supply management device 70 electrically connected to the AI device 20.

In arrangement, the AI device 20 and the heat dissipation device 60 may be provided in an accommodation cabin 102 under a seat cushion of the motorcycle 10, the first image acquisition device 30 and the second image acquisition device 40 may be installed on both left and right side of a head 103 of the motorcycle 10 respectively, the display device 50 may be provided over a dashboard on the head 103, and the power supply management device 70 may be provided in a rear container 109 of the motorcycle 10, integration with the AI device 20 is available, or an optional arrangement at an appropriate position of the motorcycle 10 is available as well; in this way, the AI device 20, the first image acquisition device 30, the second image acquisition device 40, the display device 50, the heat dissipation device 60 and the power supply management device 70 may be mounted on an AI motorcycle 10 to at least serve as the control of license plate image acquisition, plate detection, computation control of license plate number recognition, and control of power supply management to achieve effects of license plate number recognition, active detection when the AI motorcycle 10 is ridden for patrol, and achieve effects of better investigation and crime prevention mobility as well as investigation and crime prevention immediacy.

As shown in Figure 1, the power supply management device 70 at least executes a process of turning on the AI device 20, a process of turning off the AI device 20, and a procedure of charging the battery for motorcycle activation 101.

In executing the process of turning on the AI device 20, a motorcycle electric switch 104 provided with the battery for motorcycle activation 101 is turned on, and a reset switch 701 of the power supply management device 70 is activated to turn on the battery for motorcycle activation 101 to output power to the AI device 20, the first image acquisition device 30, the second image acquisition device 40, the display device 50 and the heat dissipation device 60, as well as a boot process and a system screen are displayed on the display device 50 to complete the turning on of the AI device 20.

Further, in executing the process of turning off the AI device 20, the motorcycle electric switch 104 is turned off, and the AI device 20 enters a shutdown process, after the display device 50 displays that the shutdown is complete, the reset switch 701 is activated until no output screen is displayed on the display device 50, indicating that the shutdown of the AI device 20 is completed.

Moreover, in executing the procedure of charging the battery for motorcycle activation 101, a charging selection switch 702 of the power supply management device 70 is activated to a position of a vehicle charging side, such that the power supply management device 70 receives the electric power of the motorcycle generator 105 of the AI motorcycle 10 to provide powering for an input terminal of the power supply management device 70 as charging of the battery for motorcycle activation 101, and supply the power directly or indirectly required for the AI device 20, the first image acquisition device 30, the second image acquisition device 40, the display 50 and the heat dissipation device 60 to operate; in addition, the charging selection switch 702 of the power supply management device 70 can also be activated to a position of an external charging side, such that a bluetooth communication charger 703 of the power supply management device 70 receives AC power from the external power source as the charging of the battery for motorcycle activation 101, to supply the power directly or indirectly required for the AI device 20, the first image acquisition device 30, the second image acquisition device 40, the display device 50 and the heat dissipation device 60 to operate.

By means of the operation method mentioned above, the charging selection switch 702 can charge the AI device 20 when the motorcycle 10 is traveling and converting kinetic energy into electric power; or an external charging mode may be selected by the charging selection switch 702 in parking to accept an external power source voltage for charging via the power supply management device 70; and a point-to-point link with a mobile phone/computer equipment is available with a bluetooth communication charger 703, and the charging may be controlled by a dedicated App software with a communication distance up to 15 meters.

In addition to the embodiment mentioned above, in the first embodiment of the present invention, the motorcycle electric switch 104 is further electrically connected with at least a protection device 106, a motorcycle power load 107, a motorcycle voltage and current regulation device 108, and a motorcycle generator 105 is electrically connected to the motorcycle voltage and current regulation device 108. In this way, when applying the invention to the motorcycle 10 of a fuel motor system, the arrangement of the protection device 106, the motorcycle power load 107 and the motorcycle voltage and current regulation device 108 can be used to enable the motorcycle 10 to perform the additional power supply of the AI device 20. With enlargement of output power of the generator on the AI motorcycle 10, the output current reaches 8A-10A (or another required power of motorcycle generators are replaced to meet the output power). The replacement of the rectification regulation device on the original motorcycle 10 without the external apparatus meets the vehicle requirement specifications. Also, an addition of a protective device 106 (such as a power diode) provided on the load side of the original motorcycle 10 reduces the increased current amount to the original motorcycle power supply amount, and the increased output current may supply additional power for the overall operation of the AI system, lasting for 8 hours or more, to achieve the hybrid application of fuel and electricity motorcycle.

Based on the implementation mentioned above, the AI device 20 may be added to a regular motorcycle, thereby the motorcycle generator 105 on the AI motorcycle 10 is driven with traveling kinetic energy to be charging while traveling. A supercapacitor is added as need, thereby the output reaches DC12V/15A through the motorcycle voltage and current regulation device 108 to supply more power to the power supply management device 70 for charging. As such, the electricity power required for the AI device 20, the first image acquisition device 30, the second image acquisition device 40, the display device 50 and the heat dissipation device 60 to operate is supplied directly or indirectly.

In addition to the embodiment mentioned above, in the first embodiment of the present invention, the AI device 20 is further electrically connected to a radar speedometer module 201 and a wireless network bridge(router)202, the wireless network bridge(router)202 serves as the wireless connection between the AI device 20 and other external equipments, wherein the wireless network bridge(router)202 may be a WAP device or a wireless network base station, which has a bridging function at the same time capable of being installed inside the accommodation cabin 102 of the motorcycle 10 according to the needs of the vehicle type of the applied motorcycle 10, or installed inside the head 103 of the motorcycle 10, such that the AI device 20 may achieve the effect of wireless connection with other external equipments.

In addition to the embodiment mentioned above, in the first embodiment of the present invention, the AI device 20 is electrically connected to a temperature and voltage detection device 203, the temperature and voltage detection device 203 may conduct a two-way communication with the AI device 20 through a USB port and an interface software, the temperature and voltage detection device 203 detects the temperature/voltage/current values of the first image acquisition device 30, the second image acquisition device 40, and the display device 50 for comparison with safety factor values by the AI device 20, and in turn, air intake and air exhausting of the heat dissipation device 60 are driven, thereby the accommodation cabin 102 forms a strong convective air flow to lower down the temperature.

Based on the embodiment mentioned above, the power supply management device 70 is a power supply apparatus specially developed for the system of the AI motorcycle 10, and is connected with the AI device 20 to serve as supply of regulated voltage and current for the system, control of power input and output, and digitalized power management function. Moreover, if the battery on the original unequipped motorcycle 10 fails, such that the vehicle cannot be started, there is an emergency rescue function provided.

Further, the AI device 20 is provided with another ACC function connection, which is connected with the motorcycle electric switch 104 of the motorcycle 10 to serve for detection of DC12V conduction identification as the motorcycle 10 is started, together with issuing an activation action of the AI device 20. Activation of the AI device 20 depends on the turning on of the output terminal of the power supply management device 70. In the same situation, when the motorcycle electric switch 104 of the motorcycle 10 is turned off, the ACC connection has no voltage input identification, at the same time a shutdown action of the AI device 20 is initiated. Moreover, the AI device 20, the first image acquisition device 30, the second image acquisition device 40, the display device 50 and the heat dissipation device 60 are disconnected from power supply, which will be regarded as the turning off of the output terminal of the power supply management device 70 to avoid long time connection of the AI device 20, the first image acquisition device 30, the second image acquisition device 40, the display device 50 and the heat dissipation device 60, which results in trickle of current consumption.

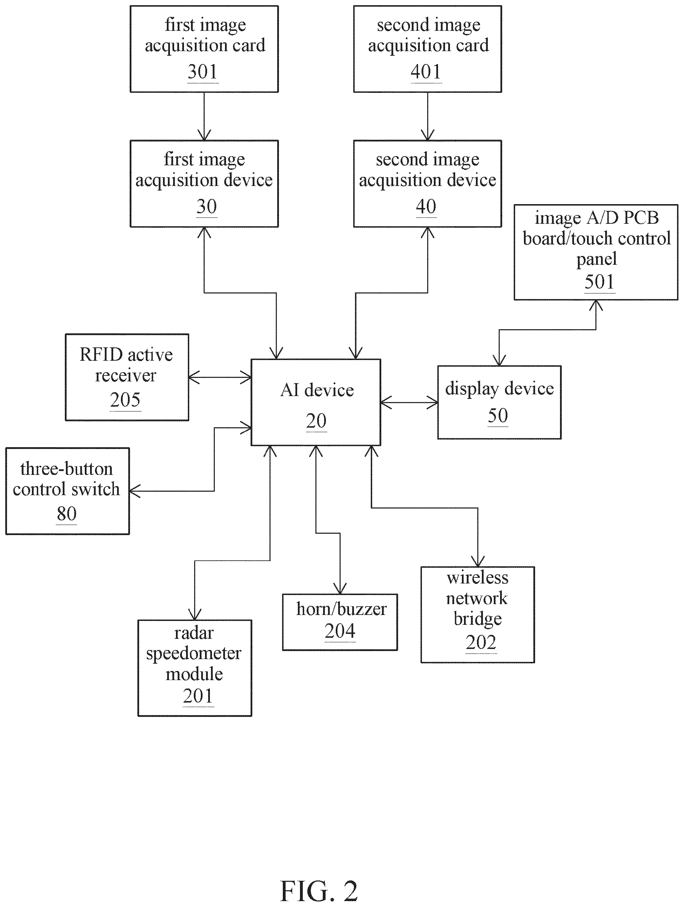

Refer to Figure 3 and Figure 2, which are a schematic diagram showing a three-dimensional stereograph according to a first embodiment of the present invention and a schematic diagram showing another control system blocks according to the first embodiment of the present invention, respectively. As shown in the figures, the present invention is a control system for an AI motorcycle, including:
a motorcycle 10, such as an regular motorcycle 10; an AI device 20, such as an AI computer, which is provided in the accommodation cabin 102 of the motorcycle 10; a first image acquisition device 30, which is electrically connected to the AI device 20, the first image acquisition device 30 comprising a first image acquisition card 301, the first image acquisition card 30 being installed on the head 103 of the motorcycle 10, and the first image acquisition card 301 being electrically connected with the first image acquisition device 30 through a coaxial cable transmission signal by an analog image signal input terminal, such that a digital image signal output terminal of the first image acquisition device 30 is electrically connected with the AI device 20 by signal transmission through a wire; such wiring layout not only considering the appropriateness of the apparatus installation construction, but also considering avoiding electromagnetic interference of the analog image signal by the transmission motor of the motorcycle 10 or the inductive load device.

A second image acquisition device 40, which is electrically connected to the AI device 20, the second image acquisition device 40 comprising a second image acquisition card 401, the second image acquisition card 401 being installed on the head 103 of the motorcycle 10, and the second image acquisition card 401 being electrically connected with the second image acquisition device 40 through a coaxial cable transmission signal by an analog image signal input terminal, such that a digital image signal output terminal of the second image acquisition device 40 is electrically connected with the AI device 20 by signal transmission through a wire; such wiring layout not only considering the appropriateness of the apparatus installation constraction, but also considering avoiding electromagnetic interference of the analog image signal by the transmission motor of the motorcycle 10 or the inductive load device.

A display device 50, which is electrically connected to the AI device 20, the display device 50 comprising an image A/D PCB board/touch control panel 501, the display device 50 being provided over a dashboard of the head 103, the image A/D PCB board/touch control panel 501 being provided in the accommodation cabin 102, the image A/D PCB board/touch control panel 501 being electrically connected to the display device 50 through a bonding line; the image A/D PCB board/touch control panel 501 being moved out of the screen body and provided in the accommodation cabin 102 by simplifying the bonding line and enhancing the tensile strength of the lead wire. Such a design is to consider that the external touch screen is exposed to wind, rain, or high temperature sunlight enviroment for a long term, which will cause adverse environmental factors of internal moisture and high temperature, thus affect the long-term durable operation of electronic components; and the components may suffer from broken point or shear breaking of substrate due to excessive vibration because of uneven roads while motorcycle traveling. Furthermore, the components are configured separately for easy maintenance of operation beifit.

A wireless network bridge (router) 202, which is electrically connected to the AI device 20 through a RJ45 port network line, serving as a point-to-point wireless connection for bridging the AI device 20 and external peripheral equipment, providing the function of gain amplification communication range with a network communication coverage unshielding range up to above 30 meters; or the AI device 20 has a built-in 5G Wifi network module in the casing thereof, connecting to an antenna pedestal of a computer casing followed by guiding to an exterior of a vehicle body as a point-to-point wireless connection between the AI device 20 and the external peripheral equipment. Moreover, the external peripheral equipment may be a smart moble phone or smart glasses as required. In terms of application, the App installed on the smart moble phone or provided specifically for smart glasses activates a linked two-way communication with the AI device 20, and acquires a real-scene image captured by the camera on the smart phone or glasses. The real image is sent to the AI device 20 for image calculation analysis via WebRTC software or other mobile phone image wireless communication mechanism, and then the analysis calculation result is returned to the smart phone or smart glasses to meet the needs of practical use.

A radar speedometer module 201, which is electrically connected to the AI device 20 and installed in a rear container 109 of the motorcycle 10, the radar speedometer module 201 being connected with a RS485 port of the AI device 20 through a UPT signal line, or can be connected with a RS232 port of the AI device 20 via a RS485/RS232 converter, or can be connected with a USB port of the AI device 20 via a RS485/USB converter, the radar speedometer module 201 being capable of cooperating with license plate number recognition functions of the plate image acquisition devices 30, 40 to calculate a speed of each traveling vehicle and a matched plate number in real time by means of an image analysis algorithm when the AI motorcycle 10 is on roadside parking.

A RFID active receiver 205, which is electrically connected to the AI device 20 and installed on a head 103 of the motorcycle 10, the RFID active receiver 205 being connected with a RS485 port of the AI device 20 through a UPT signal line, or can be connected with a RS232 port of the AI device 20 via a RS485/RS232 converter, or can be connected with a USB port of the AI device 20 via a RS485/USB converter, and the RFID active receiver 205 can conduct receiving for ETC/eTag chips on parked vehicles with respect to roadside parking billing when the AI motorcycle 10 is traveling, and cooperate with license plate recognition functions of the image acquisition devices 30, 40 to calculate a speed of each traveling vehicle and a matched plate number in real time by means of an image analysis algorithm.

Thereby, the external apparatus of the AI device 20, the first image acquisition device 30, the second image acquisition device 40, the display device 50, the radar speedometer module 201 and the RFID active receiver 205 may be mounted on a regular motorcycle 10 to at least serve as an AI motorcycle capable of control of license plate image acquisition, plate detection, computation control of license plate number recognition, and control of power supply management to achieve effects of license plate recognition and active detection when the AI motorcycle 10 is ridden for patrol, and achieve effects of better investigation and crime prevention mobility as well as investigation and prevention immediacy.

In addition to the embodiment mentioned above, in the first embodiment of the present invention, the AI device 20 is electrically connected with a horn/buzzer 204, the horn/buzzer 204 being provided on the display device 50, a trigger/signal amplification function of the horn/buzzer 204 being connected with an amplifier embedded in an image A/D PCB board/touch control panel 501 through a signal control cable for actuation, and the horn/buzzer 204 being connected to a GPIO/RS232 adapter socket of the AI device 20 through a UTP signal line, or converting an analog audio signal into a level drop signal via an embedded audio signal conversion control panel on the AI device 20, connecting to a buzzer by a horn hole line of the AI device 20, and having timing of a reporting mechanism controlled by the AI device 20. As such, when the AI motorcycle 10 is driven for patrol, if a relevant event occurs, the horn/buzzer 204 can be issue a notification/warning sound in real time, and connect with the timing of event reporting mechanism of the AI device 20, for example, the recognized plate matches with the database list in traveling or the system detects that the operation value exceeds/below the set value range, such that the present invention can meet the needs of practical use more.

In addition to the embodiment mentioned above, in the first embodiment of the present invention, a digital image signal output terminal of the first image acquisition device 30 is electrically connected with the AI device 20 by signal transmission through a USB3.0 wire, and a digital image signal output terminal of the second image acquisition device 40 is electrically connected with the AI device 20 by signal transmission through a USB3.0 wire. Such wiring layout not only considers the appropriateness of the apparatus installation constraction, but also considers avoiding electromagnetic interference of the analog image signal by the transmission motor of the motorcycle 10 or the inductive load device. Thereby, the present invention can meet the needs of practical use more.

In addition to the embodiment mentioned above, in the first embodiment according to the present invention, the AI device 20 is electrically connected with a three-button control switch 80, the three-button control switch 80 being provided where a handle 110 of the motorcycle 10 is, and electrically connected with the AI device 20 through a control line, the three-button control switch 80 being a single-circuit switch, and a control panel of the three-button control switch 80 being provided in the AI device 20 with a USB port; temporary cutting of powering or cutting of powering for the display device 50 are controlled through the AI device 20 by a first button of the three-button control switch 80; a second button of the three-button control switch 80 activating a slow shutdown program action initiated by the AI device 20; a third button of the three-button control switch 80 controlling the first image acquisition device 30 and the second image acquisition device 40 initiated by the AI device 20.

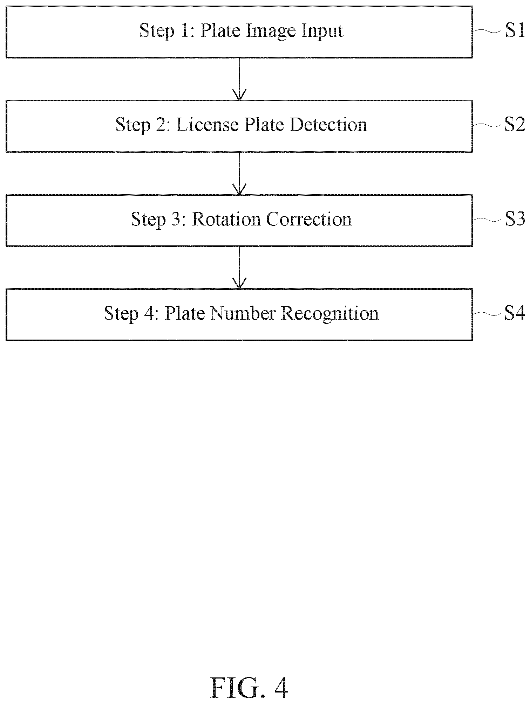

Refer to Figure 3 and Figure 4, which are a schematic diagram showing a three-dimensional stereograph according to the present invention and a schematic diagram showing a flowchart of a license plate number recognition control system according to the present invention, respectively. As shown in the figures, the present invention is a license plate number recognition control system for an AI motorcycle, including following elements.

A motorcycle 10 provided with a battery for motorcycle activation 101, an AI device 20 electrically connected to the battery for motorcycle activation 101, a first image acquisition device 30 electrically connected to the AI device 20, a second image acquisition device 40 electrically connected to the AI device 20, a display device 50 electrically connected to the AI device 20, a heat dissipation device 60 electrically connected to the AI device 20, and a power supply management device 70 electrically connected to the AI device 20.

In arrangement, the AI device 20 and the heat dissipation device 60 may be provided in an accommodation cabin 102 of the motorcycle 10, the first image acquisition device 30 and the second image acquisition device 40 may be Installed on a head 103 of the motorcycle 10 respectively, the display device 50 may be provided over a dashboard on both left and right side of the head 103, and the power supply management device 70 may be provided in a rear container 109 of the motorcycle 10, integration with the AI device 20 is available, or an arrangement at an appropriate position of the motorcycle 10 is optional; in this way, the external apparatus of the AI device 20, the first image acquisition device 30, the second image acquisition device 40, the display device 50, the heat dissipation device 60 and the power supply management device 70 may be mounted on a regular motorcycle 10 to serve as an AI motorcycle capable of the control of license plate image acquisition, plate detection and computation control of license plate number recognition, and control of power supply management to achieve effects of license plate number recognition, active detection when the AI motorcycle 10 is ridden for patrol, and achieve effects of better investigation and crime prevention mobility as well as investigation and prevention immediacy.

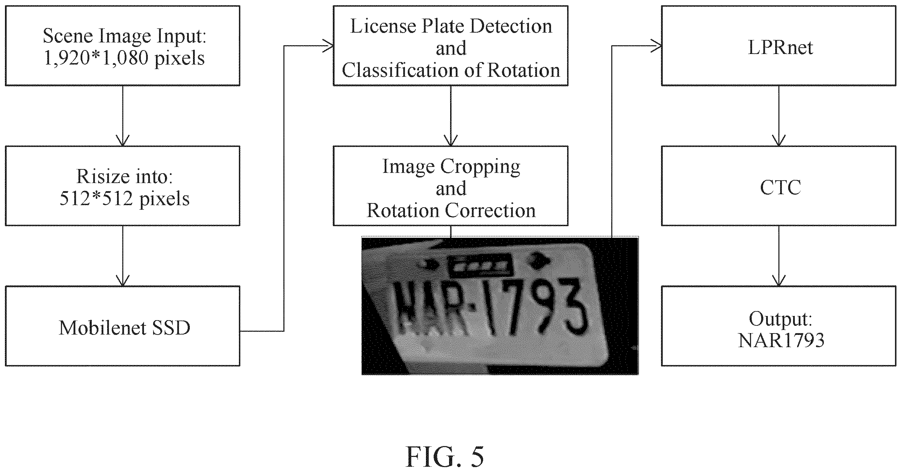

Refer to Figure 4 and Figure 5, the AI device 20 cooperates with the first image acquisition device 30 and the second image acquisition device 40 to perform a computation of a license plate number recognition; and the computation of the license plate number recognition includes at least the following steps:
Step 1 (S 1): license plate image input (Scene Image Input), in which at least one license plate image is obtained from the first image acquisition device 30 or the second image acquisition device 40 at first and input to the AI device 20.
Step 2 (S2): plate detection (License Plate Detection), in which a position, a size of a plate frame and an inclination angle of characters on a license plate in the plate image are detected based on a neural network plate detection algorithm, then the detected plate is cut out from the plate image.
Step 3 (S3): rotation correction (Rotation Correction), in which the inclination angle of characters on the license plate and the classification thereof are determined according to the step 2 to perform the rotation correction for the license plate in the plate image, such that texts on the plate do not overlap as much as possible in a horizontal alignment.
Step 4 (S4): plate number recognition (Plate Number Recognition), in which the license plate image after the rotation correction is input into a license plate identification neural network to recognize the plate number.

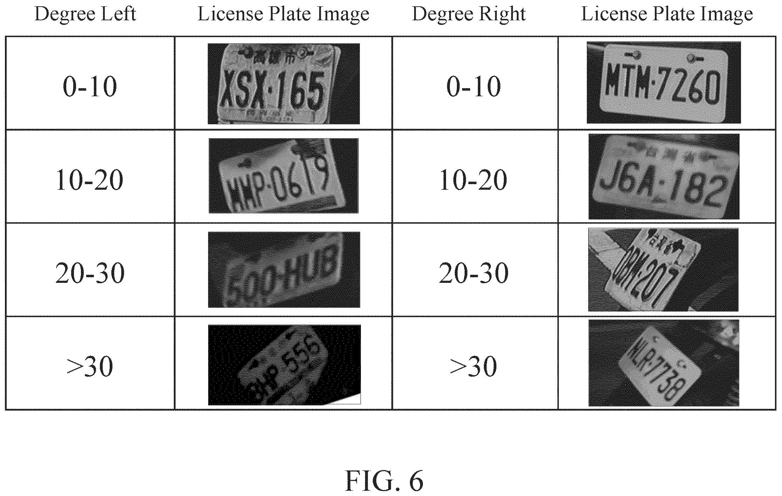

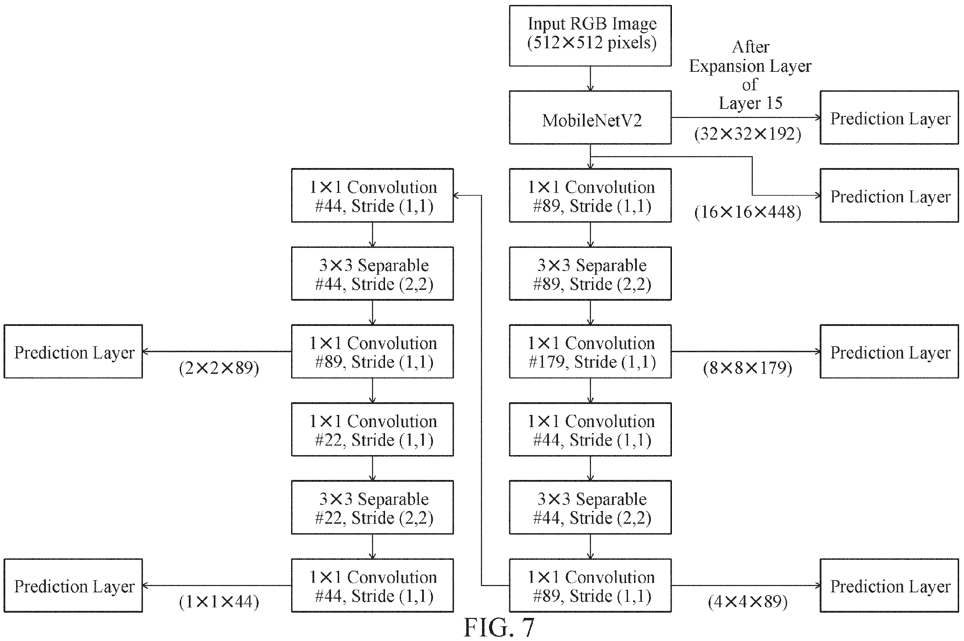

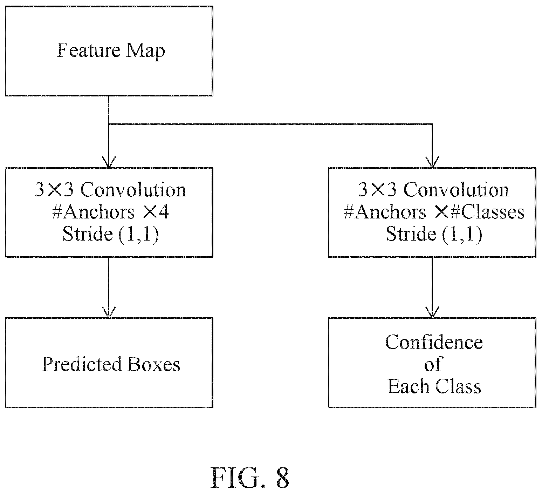

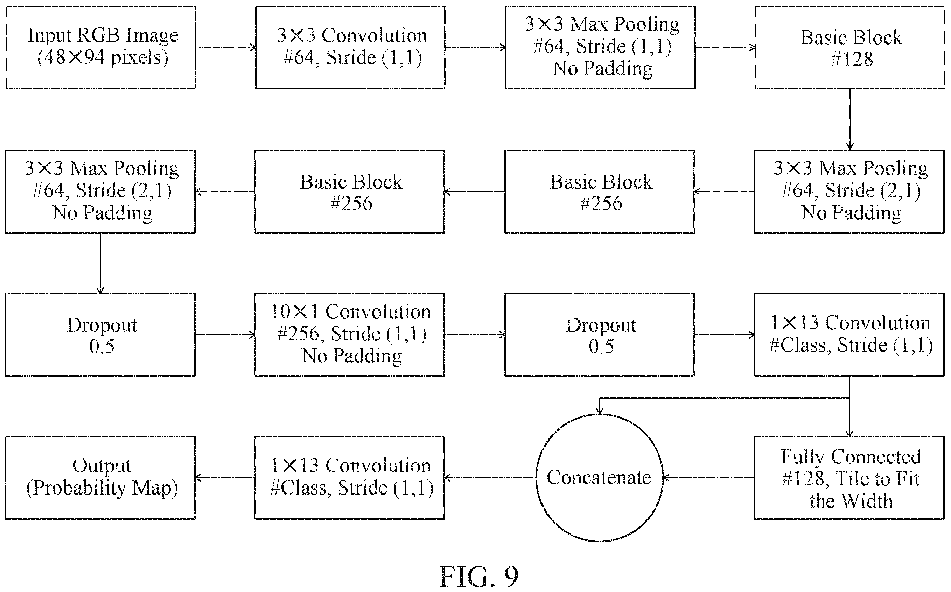

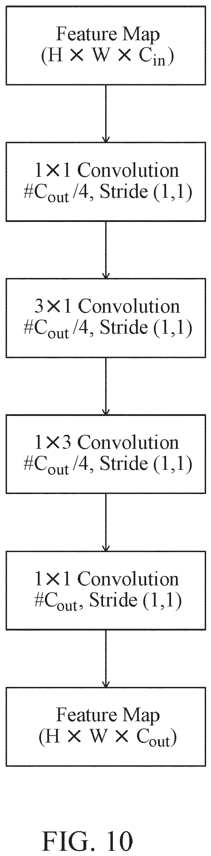

Refer to Figures 5 to 10, in which Figure 5 is a flow chart showing a license plate recognition algorithm according to the present invention, Figure 6 is a classification diagram showing characteristic inclination angles of plate images according to the present invention, Figure 7 is a network architecture diagram showing a license plate detection algorithm according to the present invention, Figure 8 shows a prediction layer in the network architecture of Figure 7, Figure 9 is a network architecture diagram showing a license plate recognition algorithm according to the present invention, and Figure 10 is a basic block diagram in Figure 9.

In addition to the embodiment mentioned above, as shown in Figure 7 and Figure 8, in the preferred embodiment of the present invention, a separable convolution can be performed for depths of the license plate detection algorithm of the neural network in the step 2 (S2), to characterize the license plate in the plate image from 512 by 512 to a smaller size gradually, and a prediction is performed for six of these depths through a prediction layer; as such, the AI device 20 can be used to cooperate with the first image acquisition device 30 and the second image acquisition device 40 for computation of plate detection.

In addition to the embodiment mentioned above, in the preferred embodiment of the present invention, a size of the first prediction layer is 32 by 32, a size of the second prediction layer is 16 by 16, a size of the third prediction layer is 8 by 8, a size of the fourth prediction layer is 4 by 4, a size of the fifth prediction layer is 2 by 2, a size of the sixth prediction layer is 1 by 1, the location and inclination angle classification of the license plate in the plate image are obtained for cutting from a scene according to coordinates and rotation correction to complete the preprocessing of license plate recognition; thereby, the AI device 20 may be used to cooperate with the first image acquisition device 30 and the second image acquisition device 40 for computation of license plate detection.

In addition to the embodiment mentioned above, as shown in Figure 6, in the preferred embodiment of the present invention, the inclination angles of plates in the step 2 (S2) are divided into 8 categories, in which two groups are from 0 degree to 10 degrees from left to right, two groups are from 10 degrees to 20 degrees from left to right, two groups are from 20 degrees to 30 degrees from left to right, and two groups are above 30 degrees from left to right, respectively, to cut the detected plate out of the plate image; as such, the AI device 20 can be used to cooperate with the first image acquisition device 30 and the second image acquisition device 40 for computation of license plate detection.

As shown in Figures 9 and 10, in the preferred embodiment of the present invention, after the preprocessing step performed above, the obtained plate image has plate string result recognized via the license plate number recognition algorithm of the plate recognition network in the step 4 (S4). The plate image is fixed as a rectangular picture of 48*94 pixels and the plate recognition network is entered. After four convolution layers, three maximum pooling layers, and one full connection layer, the features of the plate will become a series of 1 * 1 dots in the vertical direction. According to the features of the vertical position, the plate recognition network will output a probability map for each 1 * 1 feature. In accordance with the probability map, a predicted string may be obtained. Finally, the repeated characters are merged and blank characters are removed through CTC (Connectionist Temporal Classification) to come out the final plate number result.

In summary, the control system for the AI motorcycle according to the present invention does effectively improve conventional deficiencies. An AI device, a first image acquisition device, a second image acquisition device, a display device, a heat dissipation device, and a power supply management device may be mounted on a regular motorcycle to perform as an AI motocycle for control of license plate image acquisition, plate detection, computation control of license plate number recognition, and control of power supply management, to achieve effects of license plate recognition and active detection when the AI motorcycle 10 is ridden for patrol, and achieve effects of better investigation and crime prevention mobility as well as investigation and crime prevention immediacy, thus the present invention has the advantages of being progressive, practical and satisfies the needs of users to meet practical requirements for industrial application.

For an AI device and a control system thereof according to the present invention, an AI vehicle capable of multi-functional smart investigation and crime prevention is developed for shortcomings of a number of types of current police motorcycles. On the vehicle, equipments such as AI device, camera and the like are installed, which, when in traveling, may conduct license plate number recognition in real time for a license plate of a vechicle in relative movement or a vehicle in roadside parking with respect to a license plate of a stolen vehicle or a vehicle used for criminal. Also, a face recognition software is installed on the AI device. A portable, lightweight and wireless camera or a smart mobile phone is worn by a police officer on duty to conduct a real-time face recognition function by means of transmitting an image to the AI device of said motorcycle within a range capable of receiving a signal in order to apply an active detection and protect the person conducting law enforcement with an immediate recognition and alert for a wanted person or a suspect person. Also, a portable camera is used to develop an algorithm capable of analyzing image recognition with respect to identification of a physiological change due to drinking for discriminating an object under alcoholic detection. Moreover, a radar speedometer equipment may be installed on said motorcycle, which, in combination with a license plate number recognition function of an on-board AI device, provides an alert for an overspeed vehicle at a certain location, as well as in combination with information in a cloud vehicle database, provides a kind reminder via a real-time SMS (Short Message Service) text on a mobile phone for the driver whose vehicle is overspeed in order for reducing as more casualties due to overspeed vehicles as possible to achieve the goal of a friendly city.

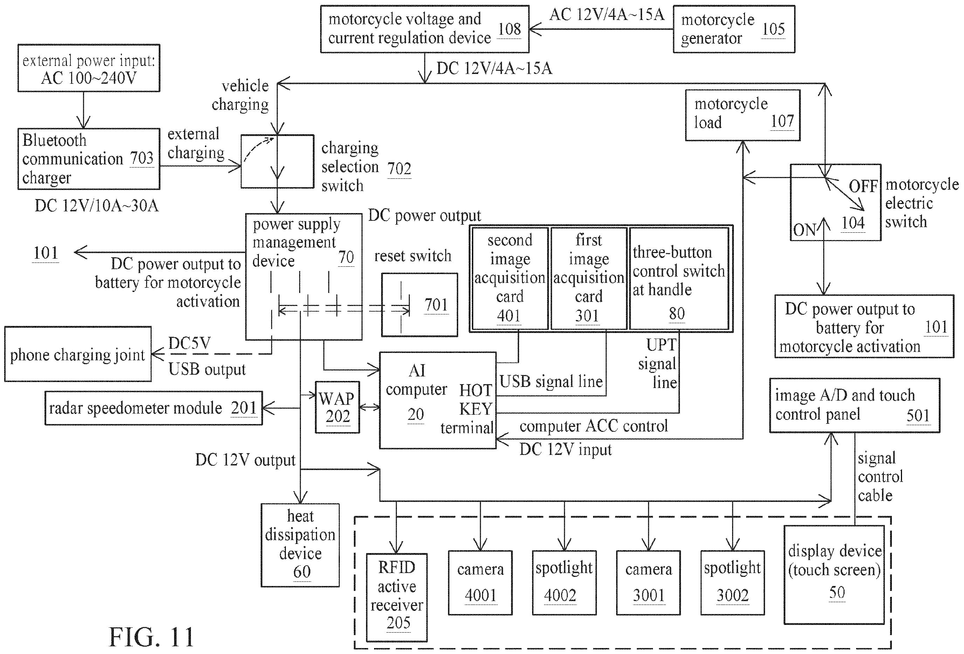

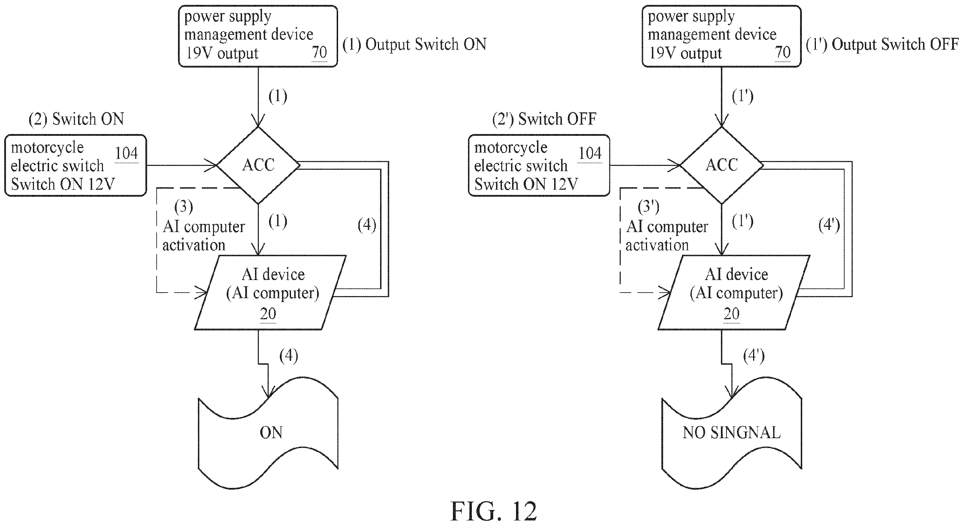

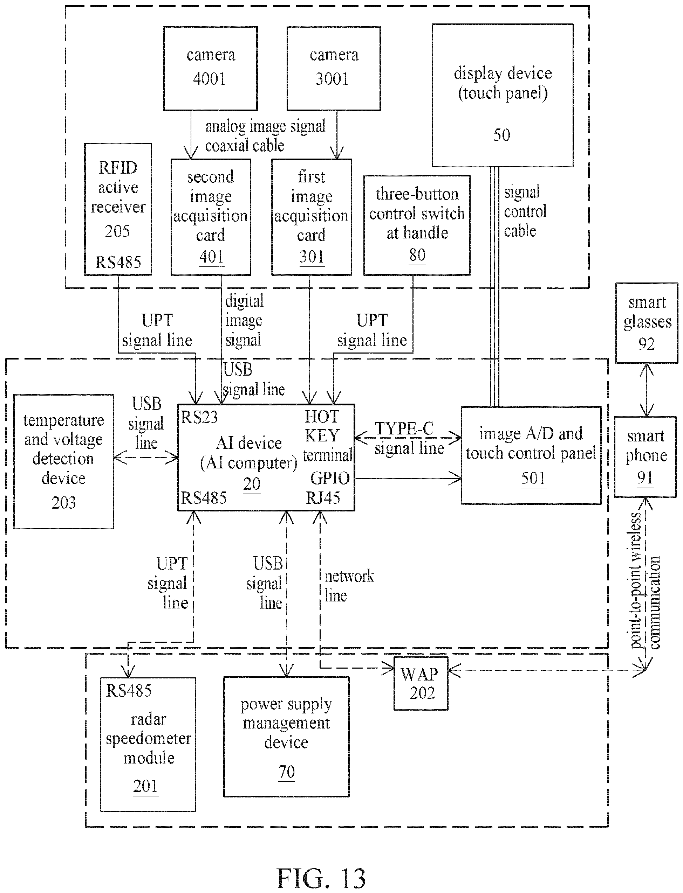

Refer to the schematic diagram showing a three-dimensional appearance according to the present invention in Figure 3, the block diagram showing power supply and control lines of an AI system according to the present invention in Figure 11, a flowchart showing ACC booting/shutdown according to the present invention in Figure 12 and a diagram showing image signal and micro-control lines of the AI system according to the present invention in Figure 13, in which a motorcycle 10 provided with a battery for motorcycle activation 101, an AI device 20 electrically connected to the battery for motorcycle activation 101, a first image acquisition device 30 electrically connected to the AI device 20, a second image acquisition device 40 electrically connected to the AI device 20, a display device 50 electrically connected to the AI device 20, a heat dissipation device 60 electrically connected to the AI device 20, and a power supply management device 70 electrically connected to the AI device 20 are included in a preferred embodiment of the present invention structurally.

The AI device 20 and the heat dissipation device 60 are provided in an accommodation cabin 102 under a seat cushion of the motorcycle 10, the first image acquisition device 30 and the second image acquisition device 40 are installed on a head 103 of the motorcycle 10, the display device 50 is provided over a dashboard on the head 103, and the power supply management device 70 is provided in a rear container 109 of the motorcycle 10, integration with the AI device 20 is available, or an optional arrangement at an appropriate position of the motorcycle 10 is available; in this way, the AI device 20, the first image acquisition device 30, the second image acquisition device 40, the display device 50, the heat dissipation device 60 and the power supply management device 70 may be mounted on an regular motorcycle 10 to at least serve as the control of licerse plate image acquisition, plate detection, computation control of license plate number recognition, and control of power supply management to achieve effects of license plate recognition, active detection when the motorcycle 10 is ridden for patrol, and achieve effects of better investigation and crime prevention mobility as well as investigation and prevention immediacy.

As shown in the diagram of Figure 11 showing the power supply and control lines of the AI system and the flowchart of Figure 12 showing the ACC booting/shutdown process, the power supply management device 70 at least executes the process of turning on the AI device 20, the process of turning off the AI device 20 and the procedure of charging the battery for motorcycle activation 101; in executing the step (1) of turning on the AI device 20, the step (2) of turning on a motorcycle electric switch 104 provided with the battery for motorcycle activation 101 is executed, and a reset switch 701 of the power supply management device 70 is activated to achieve the step (3) of turning on the battery for motorcycle activation 101 to output power to the AI device 20, the first image acquisition device 30, the second image acquisition device 40, the display device 50 and the heat dissipation device 60, as well as a boot process and a procedure screen are displayed on the display device 50 to complete the step (4) of turning on (ON) the AI device 20.

Moreover, in executing the step (1') of turning off the AI device 20, the step (2') of turning off the motorcycle electric switch 104 is executed, and the AI device 20 enters a shutdown process of step (3'), after the display device 50 displays that the shutdown is complete, the reset switch 701 is activated until no output screen (NO SINGNAL) is displayed on the display device 50, indicating that the step (4') for the shutdown (OFF) of the AI device 20 is completed.

Further, in executing the procedure of charging the battery for motorcycle activation 101, a charging selection switch 702 of the power supply management device 70 is activated to a position of a vehicle charging side, such that the power supply management device 70 receives the electric power of the motorcycle generator 105 of the motorcycle 10 to provide powering for an input terminal of the power supply management device 70 as charging of the battery for motorcycle activation 101, and supply the electric power directly or indirectly required for the AI device 20, the first image acquisition device 30 (comprising a camera 3001 and a spotlight 3002), the second image acquisition device 40 (comprising a camera 4001 and a spotlight 4002), the display 50 and the heat dissipation device 60 to operate; in addition, the charging selection switch 702 of the power supply management device 70 can also be activated to a position of an external charging side, such that a Bluetooth communication charger 703 of the power supply management device 70 receives AC power from an external power source as the charging of the battery for motorcycle activation 101, to supply the electric power directly or indirectly required for the AI device 20, the first image acquisition device 30, the second image acquisition device 40, the display device 50 and the heat dissipation device 60 to operate.

Based on the operation approach mentioned above, the charging selection switch 702 can charge the AI device 20 when the motorcycle 10 is traveling and converting kinetic energy into electric power; or an external charging mode may be selected by the charging selection switch 702 in parking to accept an external power source voltage for charging through the power supply management device 70; and a point-to-point link with a mobile phone/computer equipment is available with a Bluetooth communication charger 703, and the charging may be controlled through a dedicated App software with a communication distance up to 15 meters.

The motorcycle electric switch 104 is further electrically connected with at least a protection device 106, a motorcycle load 107, a motorcycle voltage and current regulation device 108, and the motorcycle generator 105 is electrically connected to the motorcycle voltage and current regulation device 108. In this way, when applying to the motorcycle 10 of current fuel system, the arrangement of the protection device 106, the motorcycle load 107 and the motorcycle voltage and current regulation device 108 can be used to enable the motorcycle 10 to install the apparatus of the AI device 20. With increasing the output power of the power generator on the existing motorcycle 10, the output current reaches 4A~15A (or another set of power generators are replaced to meet the output power). Alternatively, the replacement of the rectification regulation device on the original motorcycle 10 meets the vehicle system requirement specifications. Also, an addition of a protective device 106 (such as a power diode) on the load side of the original motorcycle 10 reduces the increased current value to the original motorcycle power supply value, and the increased output current may supply power for the operation of the AI system, lasting for 8 hours or more, to achieve the effect of the hybrid application of fuel and electricity.

By adding the power supply management device 70 for the existing motorcycle 10, the motorcycle generator 105 on the motorcycle 10 is changed. The motorcycle generator 105 is driven with the kinetic energy from traveling of the motorcycle. A supercapacitor is arranged as need, and the output reaches DC12V/15A through the motorcycle voltage and current regulation device 108 to supply power to the power supply management device 70 for charging. As such, the electric power required for the AI device 20, the first image acquisition device 30, the second image acquisition device 40, the display device 50 and the heat dissipation device 60 to operate may be supplied directly or indirectly.

The AI device 20 according to the present invention is further electrically connected to a radar speedometer module 201 and a wireless network bridge 202, the wireless network bridge 202 serves as the wireless connection between the AI device 20 and other external equipments, wherein the wireless network bridge 202 may be a WAP device or a wireless network base station WB, and has a bridging function at the same time capable of being installed inside the accommodation cabin 102 of the motorcycle 10 according to the needs of the vehicle type of the current motorcycle 10, or installed inside the head 103 of the motorcycle 10, such that the AI device 20 may achieve the effect of wireless connection with other external equipments. In said embodiment, a WiFi AP antenna 90 disposed at the rear container 109 of the motorcycle 10 is further linked with the wireless network bridge 202. Transwittimg signals are enhanced through the WiFi AP antenna 90, allowing a wider coverage of a wireless network and more stable signals.

The AI device 20 is electrically connected to a temperature and voltage detection device 203, the temperature and voltage detection device 203 may conduct a two-way communication with the AI device 20 through a USB port and an interface software, the temperature and voltage detection device 203 detects the temperature/voltage/current values of the first image acquisition device 30, the second image acquisition device 40, and the display device 50 for comparison with safety values set by the AI device 20. As the comparison results are higher than the safety temperature, in turn, air intake and air exhausting of the heat dissipation device 60 are driven, as a result, the accommodation cabin 102 generates a strong convective airflow to lower down the temperature.

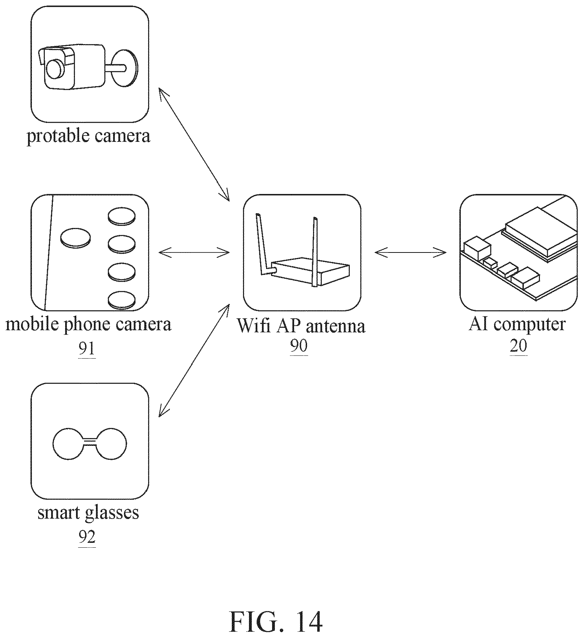

A wireless network bridge (router) WAP 202, which is electrically connected to the AI device 20 through a RJ45 port network line, serving as a point-to-point wireless connection for bridging the AI device 20 and external equipment, and has the function of gain amplification communication range with a network communication coverage unshielding range up to above 30 meters; or the AI device 20 has a built-in 5G Wifi network module in the casing thereof, connecting to an antenna pedestal of a computer casing followed by leading to an exterior of a vehicle body as a point-to-point wireless link between the AI device 20 and the external equipment. Moreover, the external equipment (peripheral equipment) may be a smart mobile phone (smart phone) 91 or a pair of smart glasses 92 as required. In terms of application, as shown in Figure 14, the App installed on the smart mobile phone 91 or provided specifically for the pair of smart glasses 92 activates a linked two-way communication with the AI device 20, and acquires a real-scene image captured by the camera on the smart phone 91 or the pair of smart glasses 92. The real image is sent to the AI device (AI computer) 20 for image analysis calculation through WebRTC software and the Wifi AP antenna 90 or other phone image wireless communication mechanism, and then the analysis calculation result message is returned to the smart phone 91 or the pair of smart glasses 92 to meet the needs of practical use.

The AI device 20 is electrically connected with a three-button control switch 80, the three-button control switch 80 being provided where a handle 110 of the motorcycle 10 is, and electrically connected with the AI device 20 through a control line, the three-button control switch 80 being a single-circuit switch, and a control panel of the three-button control switch 80 being provided in the AI device 20 with a USB port; activating of powering or cutting of powering for the display device 50 are controlled through the AI device 20 by a first button of the three-button control switch 80; a second button of the three-button control switch 80 activating a slow shutdown program action through the AI device 20 to control the power of AI device 20; a third button of the three-button control switch 80 controlling the power on or off for the first image acquisition device 30 and the second image acquisition device 40 through the AI device 20.

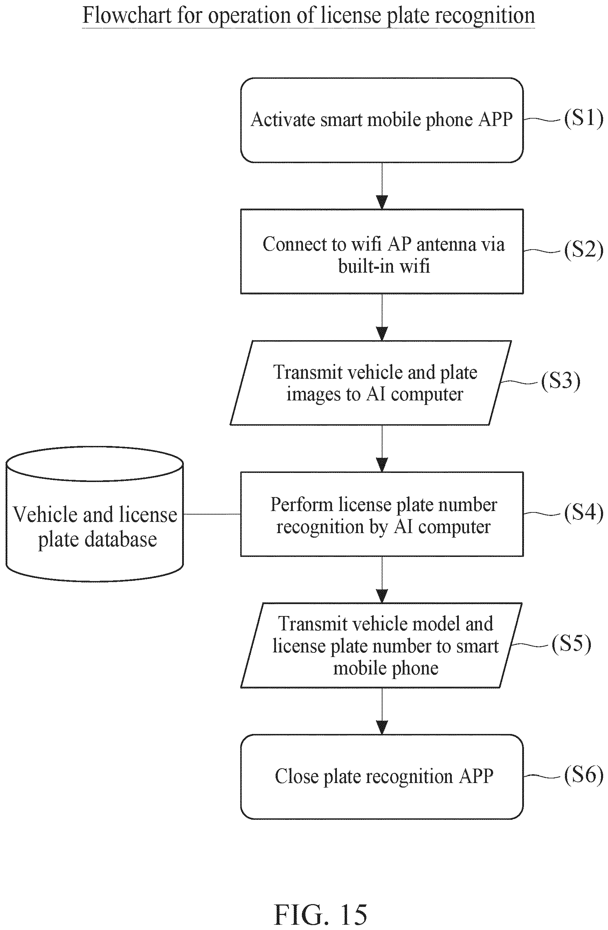

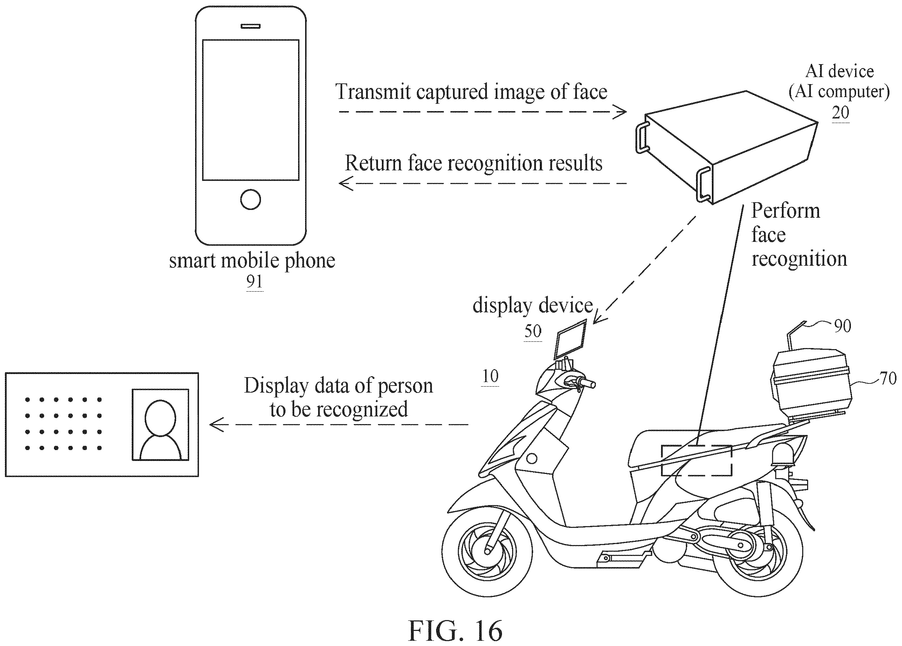

Refer to the schematic diagram of Figure 14 showing image information processing for an active recognition control system of an AI motorcycle according to the present invention, the step flow diagram of Figure 15 showing license plate number recognition information processing for the active recognition control system of the AI motorcycle according to the present invention, and the schematic diagram of Figure 16 showing a processing flow of face image recognition for the active recognition control system of the AI motorcycle according to the present invention. When a user of the present invention, such as a police officer, parks the AI motorcycle and then walks for patrol instead, the smart mobile phone 91 or a portable camera may be used to acguire a plate or face image if a suspicious vehicle or pedestrian is encountered, followed by transmission the image to the AI computer 20 on the motorcycle through the Wifi AP antenna 90 to perform the license plate number recognition shown in Figure 15, or the face recognition shown in Figure 16, then recognition results are returned to the police officer on patrol by the AI computer 20. In order for a more efficient stop for investigation and crime prevention to be conducted by a law enforcement officer on duty, the AI device (AI computer) 20 cooperates with the first image acquisition device 30 and the second image acquisition device 40, or the camera of the smart mobile phone 91 or the pair of smart glasses 92 to acquire images for calculation of recognizable figures, such as license plates or faces. Moreover, an active computation for recognized license plates or faces comprises at least the steps of:
(S 1) Step 1: Opening the license plate or face image recognition APP preloaded on the smart mobile phone 91.
(S2) Step 2: Connecting to the Wifi AP antenna 90 disposed on the motorcycle 10 by means of a built-in Wifi.
(S3) Step 3: Capturing at least one plate or face image from the camera of the smart mobile phone 91 or the pair of smart glasses 92, and transmitting the image to the AI device 20 (AI computer) on the motorcycle 10 through the link of the Wifi AP antenna 90.
(S4) Step 4: Recognizing input images by the AI device 20.
(S5) Step 5: Linking the image recognition result through the Wifi AP antenna 90 by the AI device 20, which returns the information for input to the smart mobile phone 91 or the pair of smart glasses 92, and displaying the result by the image recognition APP.
(S6) Step 6: Closing the license plate or face image recognition APP preloaded on the smart mobile phone 91.

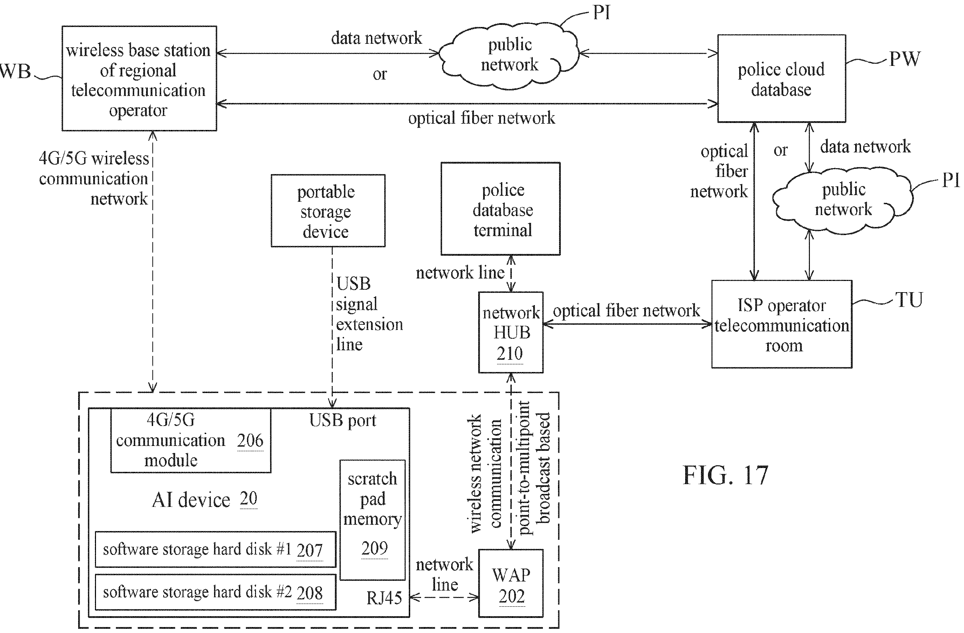

Refer to the schematic diagram of Figure 17 showing communication links between the AI motorcycle and a remote database system. The AI device 20 is not only connected to a public network PI or an optical fiber network of a government department through a WAP 202 with a data network of an ISP telecommunication base TU for login to, for example, a police cloud database PW to update relevant recognition information, but also connected to a network HUB 210 through a wireless network for connection to a police database terminal for updating relevant recognition information. The AI device 20 can further have a 4G/5G communication module 206 (4G/5G SIM card) disposed, thereby a wireless base station of regional telecommunication operator WB is connected through a 4G/5G communication network, further, a public network PI or an optical fiber network of a government department is connected with a data network for login to, for example, a police cloud database PW to update relevant recognition information. Further, the AI device 20 is provided with a scratch pad memory 209, as well as a software storage hard disk 207 and a data storage hard disk 208, by which installation for running program is available and recognition image information is stored, or a portable storage device is connected through a USB port.

### Second Embodiment

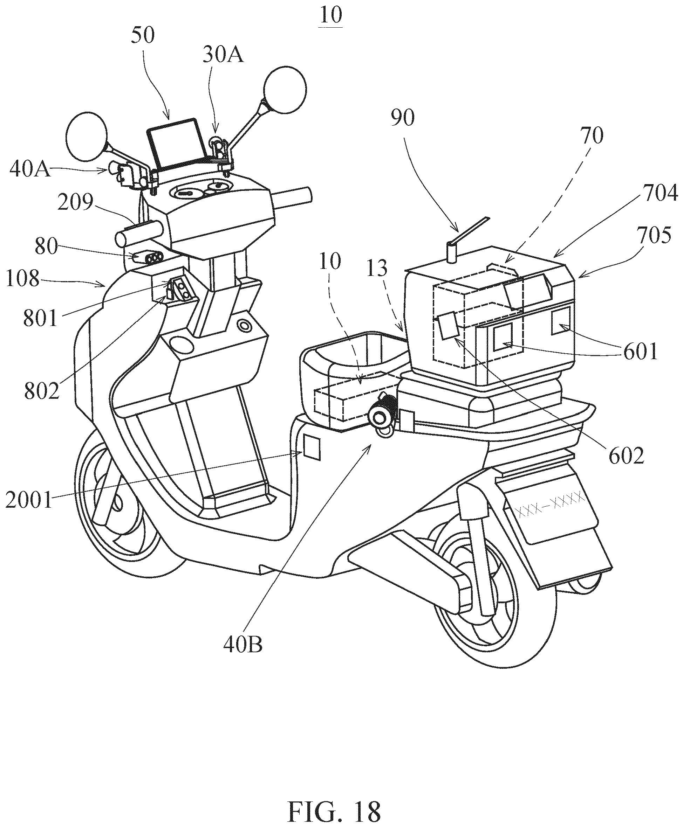

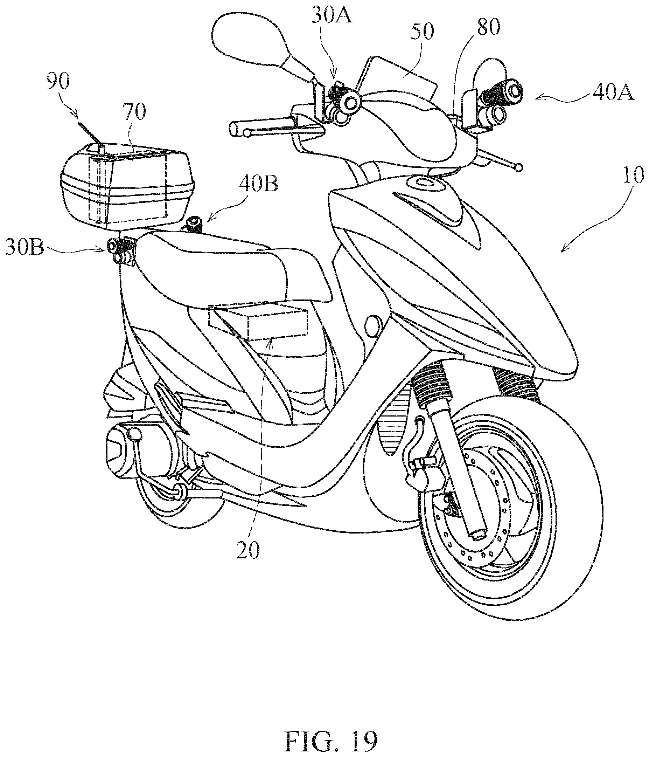

Refer to the diagrams of Figure 18 and Figure 19 showing three-dimensional appearances for the second preferred embodiment of the AI vehicle according to the present invention. The AI vehicle of said embodiment has four image acquisition devices mounted on a motorcycle 10, wherein a first image acquisition device 30A is disposed on a right side front end of a head 103 of the motorcycle 10 for acquiring an image of a rear plate of a vehicle on the right side; a second image acquisition device 40A is disposed on a left side front end of the head 103 of the motorcycle 10 for acquiring an image of a rear plate of a vehicle on the left side; a third image acquisition device 30B is disposed on a right side rear end of an accommodation cabin 102 of the motorcycle 10 for acquiring an image of a front plate of the vehicle on the right side; a fourth image acquisition device 40B is disposed on a left side rear end of the accommodation cabin 102 of the motorcycle 10 for acquiring an image of a front plate of the vehicle on the left side. Each of the image acquisition devices has a camera and a spotlight, and the embodiment comprises an AI device 20, a display device 50, a heat dissipation device 60, a power supply management device 70, a three-button control switch 80 and a Wifi AP antenna 90, of which the control system is the same as what mentioned in the above embodiment.

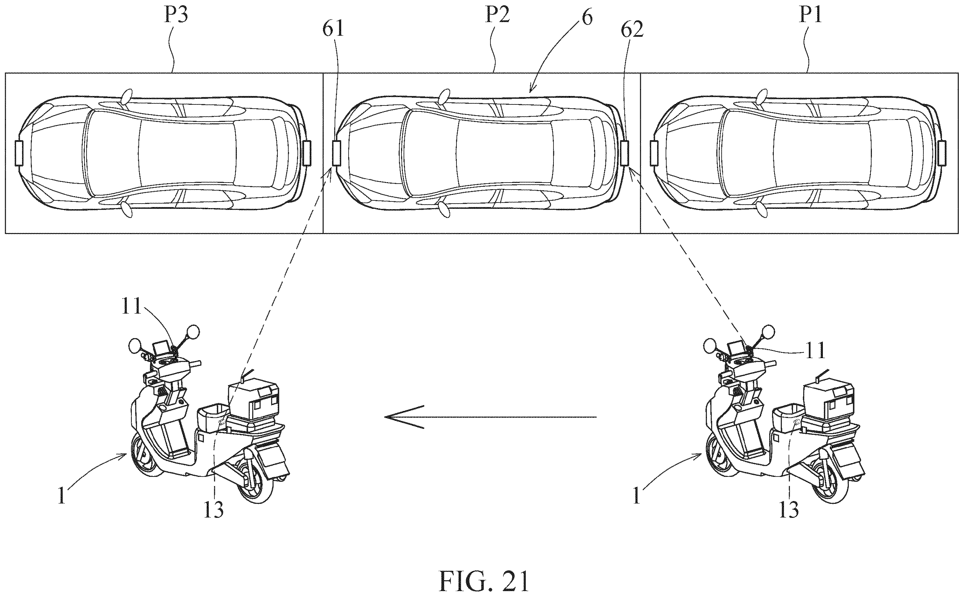

A preferred second embodiment of an AI vehicle for roadside parking billing according to the present invention is described in detail below with reference to the drawings. Refer to Figures 18 and 19, which are diagrams showing three-dimensional appearances of an AI motorcycle for roadside parking billing according to the present invention. As shown in the figures, the AI motorcycle for roadside parking billing according to the present invention includes a motorcycle 10, an AI device 20, a first image acquisition device 30A, a second image acquisition device 40A, a third image acquisition device 30B, and a fourth image acquisition device 40B, a display device 50, a power supply management device 70, a Wifi AP antenna 90, a three-button control switch 80 and a left/right camera switch 801; wherein, the first image acquisition device 30A is disposed on a right side front end of a head 103 of the motorcycle 10, the second image acquisition device 40A is disposed on a left side front end of the head 103 of the motorcycle 10, the third image acquisition device 30B is disposed on a right side rear end of a accommodation cabin 102, the fourth image acquisition device 40B is disposed on a left side rear end of the accommodation cabin 102. As shown in Figure 21, when the AI motorcycle 10 is traveling, the first image acquisition device 30A may acquire a plate image of a rear license plate 62 of a vehicle 6 in a parking space on the right side, the third image acquisition device 30B may acquire a plate image of a front license plate 61 of the vehicle 6 in the parking space on the right side, while the second image acquisition device 40A may acquire a plate image of a rear plate of a vehicle (not shown) in a parking space on the left side, the fourth image acquisition device 40B may acquire a plate image of a front plate of the vehicle in the parking space on the left side.

In the AI motorcycle for roadside parking billing mentioned above, the AI (Artificial Intelligence) device 20 is disposed in an accommodation cabin 102. The AI device 20 is an Nvidia GPU card or Intel VPU card for high-speed image calculation installed in an industrial computer. The accommodation cabin 102 has an air inlet 1001 and 1002 (not shown) on left, right sides thereof, respectively. The image acquisition devices 30A.40A.30B.40B have a camera and a spotlight, respectively. The display device 50 is disposed at a location on a head 103 of the motorcycle 10. The power supply management device 70 is disposed in a rear container 109 of the motorcycle 1. The power supply management device 70 is provided with a power switch 704, a waterproof power charging seat 705, multiple air exhaust based heat dissipation fans 601 and at least one suction based heat dissipation fan 602. The Wifi AP antenna 90 is disposed on a top surface of a housing of the power supply management device 70. The three-button control switch 80 is disposed on a lower side of a left handle 110 of the motorcycle 10. The left/right camera switch 801 is disposed at a lower left location of the head 103 of the motorcycle 10 with an AI system power button 802 provided at a location adjacent thereto. The head 103 of the AI motorcycle 1 is further provided with a voltage and current regulation device 108, an embedded buzzer 204. The AI device 20, the first image acquisition device 30A, the second image acquisition device 40A, the third image acquisition device 30B, the fourth image acquisition device 40B, the display device 50, the power supply management device 70, the Wifi AP antenna 90, the three-button control switch 80 and the left/right camera switch 801 are electrically connected with each other.

The image acquisition devices 30A and 40A constitute a first image acquisition unit for acquiring rear plate images and vehicle body images of vehicles parked in roadside parking spaces; the image acquisition device 30B and 40B constitute a second image acquisition unit for acquiring front plate images and vehicle body images of the vehicles in the roadside parking spaces. The display device 50, which may be a touch screen, may display the license plate recognition numbers of the vehicles in the left/right side roadside parking spaces in real time. The power supply management device 70 is used to provide a supplied power for equipments of the license plate recognition system, including the AI device 20, the image acquisition devices 30A.40A.30B.40B , the display device 50, the three-button control switch 80 etc. The Wifi AP antenna 17, which is an antenna used to enhance wireless signals, may allow for a wider coverage and more stable signals of a wireless communication network. A leftmost button of the three-button control switch 80 is a first control button for controlling the power of the image acquisition devices or acquiring the input of the images, a middle button and a rightmost button are a second control button for controlling a monitor screen of the display device 50, and a third control button for on/off control of the AI device 20, respectively. The left/right camera switch 801, which is used to switch the supplied power for the image acquisition devices, is used to switch activation of the left/right camera and spotlight sets. The AI system power button 802 is used to turn on/off the power output of the power supply management device 70 provided in a rear container 109. The motorcycle voltage and current requlation device 108 is a device used to improve the motorcycle power system for voltage regulation of the vehicle, protecting electronic equipments of the vehicle. The embedded buzzer 204 is used to sound an alarm immediately to remind the billing officer when a problematic vehicle is recognized or no license plate is available for recognition. The billing officer may also use a smart mobile phone for wireless connection to the AI device 20 on the AI motorcycle 10 via the Wifi AP antenna 90 to perform a two-way communication license plate recognition function. The air inlets 1001 and 1002 of the accommodation cabin 102 on both sides are used for the accommodation cabin 102 accommodating the AI device 20 to lower down temperature for heat dissipation. The air exhaust based heat dissipation fans 601 and the suction based heat dissipation fan 602 are used for the power supply management device 70 to dissipate heat for temperature lowering. The power switch 704 provided at the power supply management device 70 serves as a selection switch for switching between charging of a motorcycle generator and external connection of an external power source. The waterproof power charging seat 705 may be a power seat for aviation, serving as an external fast charging power seat for the power supply management device 70 provided in the rear container 109.

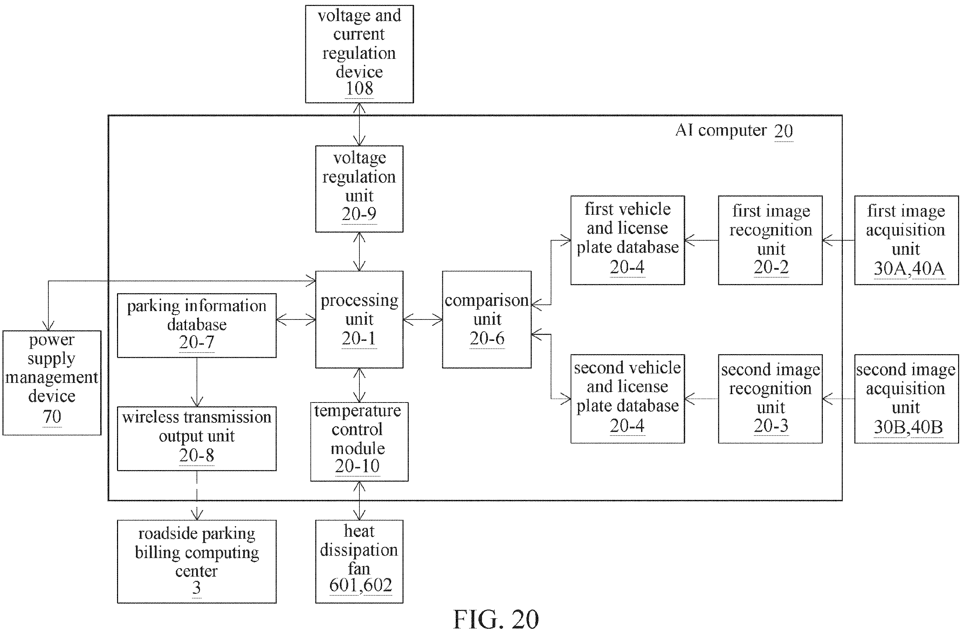

Refer to the schematic diagram showing structural blocks of an AI device 20 in Figure 20. The AI device 20 comprises a processing unit 20-1, a first image recognition unit 20-2, a second image recognition unit 20-3, a first vehicle and license plate database 20-4, a second vehicle and license plate database 20-5, a comparison unit 20-6, a parking information database 20-7, a wireless transmission output unit 20-8, a voltage regulation unit 20-9 and a temperature control module 20-10. In an operation, the vehicle body images and the license plate images for the parking space on the right side are acquired by a right side image acquisition unit composed of the first image acquisition device 30A and the third image acquisition device 30B. At first, the images of the rear license plate 62 and the vehicle body of the vehicle 6 in the parking space on the right side are acquired by the first image acquisition device 30A, input into the first image recognition unit 20-2, and then the rear plate number and a vehicle model are output to the first vehicle and license plate database 20-4. Next, as shown in Figure 20, the AI motorcycle 10 travels from the parking unit P1 forward to the vehicle 6 parked in the parking unit P2, proceeding with traveling to the parking unit P3. In the meanwhile, the image of the front license plate 61 and the image of the vehicle body of the vehicle 6 in the parking space on the right side are acquired by the third image acquisition device 30B, input into the second image recognition unit 20-3, and then the front plate number and a vehicle model are output to the second vehicle and license plate database 20-5. Then, the rear plate number and the front plate number as well as the vehicle models of the same car are input into the comparison unit 20-6 by the vehicle and license plate databases 20-4, 20-5simultaneously for comparison. If the two plate numbers and the quantities are consistent from the comparison result, parking information, including a license plate number, a parking unit number, a parking space longitude/latitude, vehicle entry time, exit time, parking duration, is input into the parking information database 20-7 by the processing unit 20-1, followed by being input into the wireless transmission output unit 20-8, and being uploaded to the roadside parking billing computing center 3 by the wireless transmission output unit 20-8 in a manner of wireless communication for billing computing of the parking fee. If the front and rear plate numbers or quantities are inconsistent from the comparison result, the processing unit 20-1 performs license plate number amending with algorithm or quantity amending with algorithm, followed by input into the parking information database 20-7.

The operation procedure of the roadside parking billing for the parking space on the left side is the same as the operation procedure for the parking space on the right side mentioned above. As the AI motorcycle 10 is traveling, the vehicle body images and the plate images for the parking space on the left side are acquired by a left side image acquisition unit composed of the second image acquisition device 40A and the fourth image acquisition device 40B. At first, the images of the rear license plate number and the vehicle body of the vehicle in the parking space on the left side are acquired by the second image acquisition device 40A, input into the first image recognition unit 20-2, and the rear license plate number and a vehicle model are output to the first vehicle and license plate database 20-4. Next, the images of the front plate and the vehicle body of the vehicle in the parking space on the left side are acquired by the fourth image acquisition device 40B, input into the second image recognition unit 20-3, and the front license plate number and a vehicle model are output to the second vehicle and license plate database 20-5. Then, the rear plate number and the front plate number as well as the vehicle models of the same car are input into the comparison unit 20-6 by the vehicle and license plate databases 20-4, 20-5 simultaneously for comparison. If the two license plate numbers and the quantities are consistent from the comparison result, parking information, including a license plate number, a parking unit number, a parking space longitude/latitude, vehicle entry time, exit time, parking duration, is input into the parking information database 20-7 by the processing unit 20-1, followed by being input into the wireless transmission output unit 20-8, and being uploaded to the roadside parking billing computing center 3 by the wireless transmission output unit 20-8 in a manner of wireless communication for billing computing of the parking fee. If the front and rear plate numbers or quantities are inconsistent from the comparison result, the processing unit 20-1 performs license plate number amending with algorithm or quantity amending with algorithm, followed by input into the parking information database 20-7.

In the AI motorcycle for roadside parking billing mentioned above, the first image acquisition device 30A is disposed in a forward direction with a right deflection angle of 45°, the second image acquisition device 40A is disposed in a forward direction with a left deflection angle of 45°, the third image acquisition device 30B is disposed in a rearward direction with a left deflection angle of 45°, the fourth image acquisition device 40B is disposed in a rearward direction with a right deflection angle of 45°. The three-button control switch 80 has a first control button for controlling the image acquisition devices 30A.40A.30B.40B or a first control button which controls whether an image acquired by a source camera for a license plate recognition software is input by means of a program installed by the AI device 20, a second control button for controlling the display device 50, a third control button for controlling the AI device 20. The left/right camera switch 801 may only activate the front, rear camera and spotlight sets on the right side or the left side based on single-side or two-side disposition of parking spaces for roadside parking.

In the AI motorcycle for roadside parking billing mentioned above, the power supply management device 70 is connected to the processing unit 20-1 of the AI device 20 for supplying power to the AI device 20 and the processing unit 20-1. The processing unit 20-1 may be a central processing unit or single chip, software or logic circuit. The voltage regulation unit 20-9, which is connected to the voltage and current regulation device 108, may regulate the power supply management device 70 for output of an appropriate voltage. The temperature control module 20-10, which is connected to the air exhaust based heat dissipation fans 601 and suction based heat dissipation fan 602, may detect and regulate the temperature in the accommodation cabin 102.

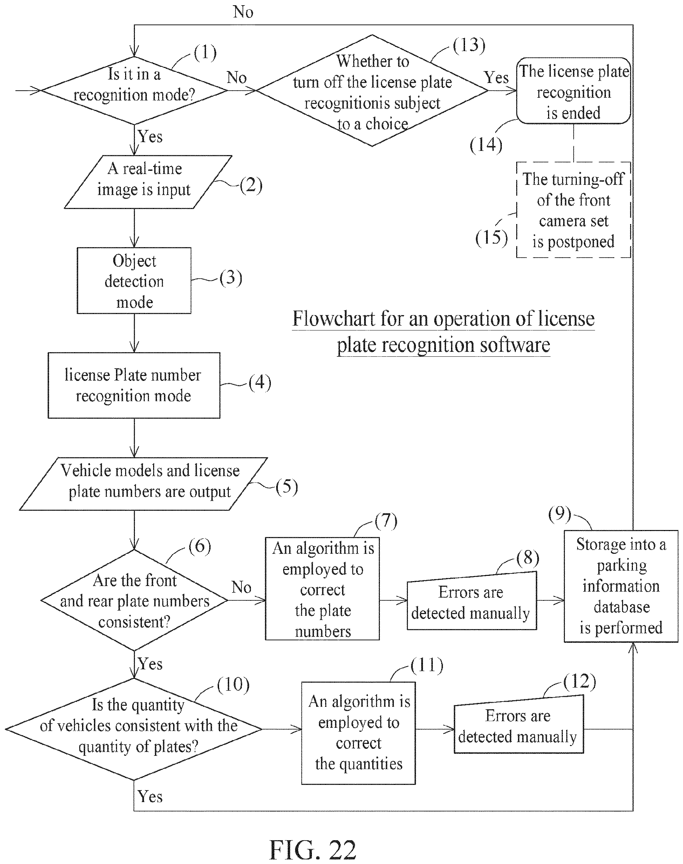

Refer to the flowchart showing an operation for the license plate recognition software (LPR Software Flow Chart) in Figure 22. The operation procedure flow of a roadside parking plate recognition system according to the present invention is as follows:
(1) Determine whether it is in a recognition mode.
(2) If the determination is Yes, then a real-time image is input.
(3) An object detection mode is performed.
(4) A license plate number recognition mode is performed.
(5) Vehicle models and license plate numbers are output.
(6) The front, rear plate numbers are compared for consistency.
(7) If the comparison result is No, then the employment of an algorithm for correcting the license plate numbers to a higher accuracy.
(8) Manual detection of errors is performed.
(9) Storage into a parking information database is performed.
(10) If the comparison result is Yes in the step (6), then a comparison is performed to check whether the quantity of vehicles and the quantity of plates are consistent.
(11) If the result is No from the comparison, then an algorithm is employed to correct the quantities.
(12) Manual detection of errors is performed.
   If the result is Yes from the comparison in the step (10), then the step (9) is performed for storage into a parking information database.
(13) If the determination is No in the step (1), then whether to turn off the license plate recognition operation is subject to a choice.
(14) If the choice is Yes in the step (13), then the license plate recognition operation is ended. If the choice is No in the step (13), then return to the operation flow of the step (1).
(15) When the step (14) is executed for stopping the license plate recognition operation, the turning-off of the front image acquisition device is postponed.

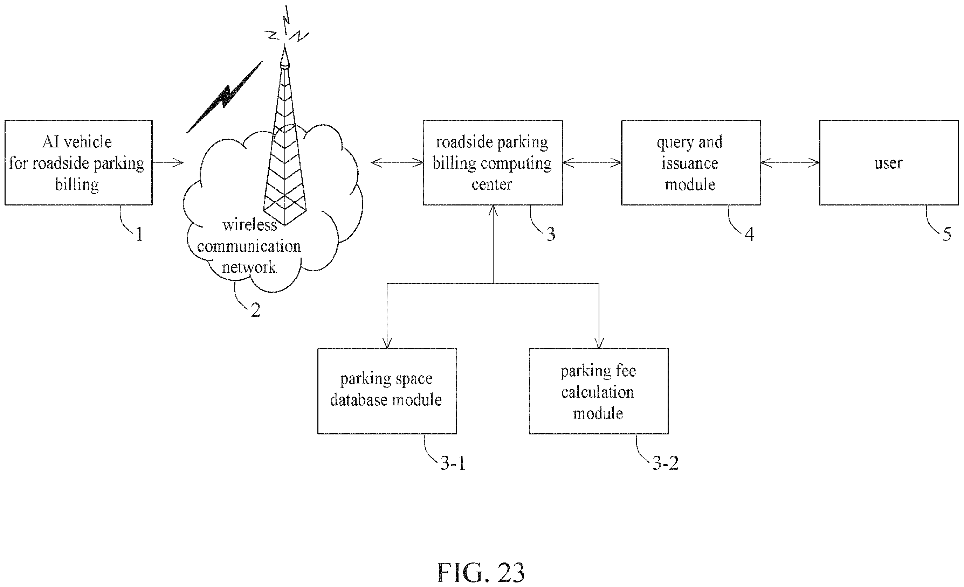

Refer to the schematic diagram showing blocks for a roadside parking billing platform system in Figure 23. For the operation method and procedure of the roadside parking billing platform system according to the present invention, the parking information (comprising a license plate number, a parking unit number, a parking space longitude/latitude, vehicle entry time, exit time, parking duration) is uploaded to a parking space database module 3-1 of the roadside parking billing computing center 3 via the wireless communication network 2 by the AI vehicle for roadside parking billing 1 at first, and a parking fee is calculated by a parking fee calculation module 3-2 according to a parking rate, followed by having the parking fee information sent to the user, comprising a terminal of a parking fee toll and a mobile phone of a driver, through a query and issuance module 4 to complete practical application and the purpose of use for roadside parking billing and tolling.

Further, the vehicles in roadside parking according to the present invention may be cars or motorcycles, the roadside parking spaces may be car parking spaces or motorcycle parking spaces, the parking billing time unit may be every hour, every half hour, or every count of billing. The wireless transmission output unit 20-8 is provided with a wireless communication module, such as a SIM card of a 4G/5G mobile communication module; the wireless communication network 2 is a PHS system, a GSM system, a GPRS/EDGE system, a CDMA/HSPA/LTE system, a CMDA2000/UMB system, a D-SCDMA/TD-HSPA/TD-SCDMA+LTE system, a Wifi/WiMax system or an IMT-Advance system.

Furthermore, the AI vehicle 1 according to the present invention may operate cooperatively with a parking space management platform for uploading the parking information stored by the AI vehicle 1 to a parking space database module of a parking space management platform, and real-time free parking space information is recorded, provided to drivers with real-time transmission for quick query of available roadside parking spaces by a parking space management computing module.

### Third Embodiment

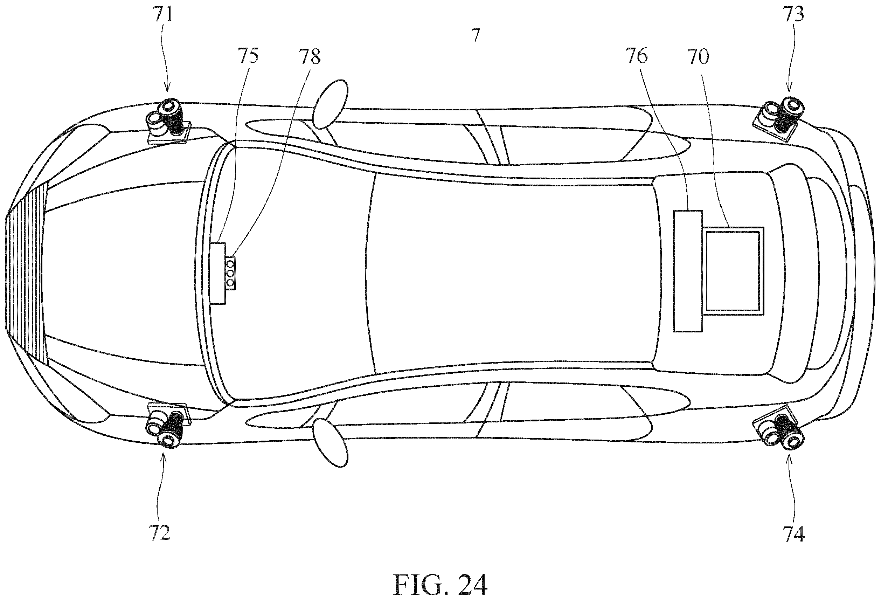

Moreover, as shown in Figure 24, the AI vehicle 1 for roadside parking billing according to the present invention may be an automobile, which includes a car 7, an AI device 70, a first image acquisition device 71, a second image acquisition device 72, a third image acquisition device 73, a fourth image acquisition device 74, a display device 75, a power supply management device 76 and an three-button control switch 77. The AI device 70, the first image acquisition device 71, the second image acquisition device 72, the third image acquisition device 73, the fourth image acquisition device 74, the display device 75, the power supply management device 76 and the three-button control switch 77 are electrically connected with each other. The AI device 70 and the power supply management device 76 are disposed in the rear compartment of the car 7. The first image acquisition device 71 is disposed on a right side vehicle body of a hood at the front of the car 7. The second image acquisition device 72 is disposed on a left side vehicle body of the hood at the front of the car 7. The third image acquisition device 73 is disposed on a right side vehicle body of a rear compartment at the rear of the car 7. The fourth image acquisition device 74 is disposed on a left side vehicle body of the rear compartment at the rear of the car 7. The display device 75 and the three-button control switch 77 are disposed at appropriate locations on a driving console of the car 7. The operation method and the operation procedure of the AI automobile for roadside parking billing are the same as those of the AI motocycle for roadside parking billing, and may be applied to a computing platform system for roadside parking billing and roadside parking space management.

In summary, the AI vehicle with its control system according to the present invention indeed improves conventional deficiencies effectively and provide an AI motorcycle or automobile mounted with an AI device and image acquisition device, such that a billing officer may acquire license plate numbers and parking information of vehicles in roadside parking by the image acquisition device directly without stopping or getting off the motorcycle/automobile, and then upload the parking information to a roadside parking billing computing center in a manner of wireless communication for real-time calculation of parking fees of various parked vehicles, following by transmission of the parking fee information to a parking fee toll and drivers, in order for the billing officer to be able to patrol and acquire more images of vehicles in parking spaces by taking a trip, such that the time for billing is saved, the safety of the billing officer is guaranteed, traffic accidents are reduced, obstruction to road traffic is avoided to maintain traffic safety. Moreover, the parking fee information may be calculated in real time for drivers to use, thereby achieving the practical application and economic benefits for roadside parking billing and tolling.

In conclusion, an AI vehicle with its control system thereof are provided according to the present invention. The AI motorcycle includes a motorcycle with a battery for activation, an AI device electrically connected to the battery for motorcycle activation, a first image acquisition device electrically connected to the AI device, a second image acquisition device electrically connected to the AI device, a display device electrically connected to the AI device and a power supply management device electrically connected to the AI device. The AI motorcycle comprises a power supply and control system as well as an image signal and micro-control system, and the AI device is linked to a WiFi AP antenna, been linked to a smart mobile phone or a pair of smart glasses to perform a real-time license plate recognition or face recognition, followed by returning and displaying image recognition results. Further, the AI motorcycle may be connected to a remote database for information update while having the effectiveness of active detection to achieve effects of better investigation and crime prevention mobility as well as investigation and prevention immediacy.

### List of Symbols

AI Vehicle 1
Automobile 10
Activation battery for motorcycle 101
Accommodation cabin 102
Left/Right accommodation Cabin air inlets 1001.1002 Head 103
Motorcycle electric switch 104
Motorcycle generator 105
Protection device 106
Motorcycle power load 107
Voltage and current regulation device 108
Rear container 109
Handle 110
AI device 20
Radar speedometer module 201
Wireless network bridge (router) 202
Temperature and Voltage detection device 203
Hor/Buzzer 204
RFID active receiver 205
4G/5G communication module 206
Software storage hard disk 207
Data storage hard disk 208
Scratch pad memory 209
Network HUB 210
First image acquisition device 30
First image acquisition card 301
Camera 3001
Spotlight 3002
Second image acquisition device 40
Second image acquisition card 401
Camera 4001
Spotlight 4002
Display device 50
Image A/D PCB board/touch control panel 501
Heat dissipation device 60
Air exhaust fan 601
Air suction fan 602
Power supply management device 70
Reset switch 701
Charging selection switch 702
Bluetooth communication charger 703
Power switch 704
Waterproof power charging seat 705
Three-button control switch 80
Left/Right camera switch 801
AI system power button 802
Wifi AP antenna 90
Public network PI
Police cloud database PW
ISP operator telecommunication base TU
Wirreless base station of regional telecommunication network WB
Processing unit 20-1
First image recognition unit 20-2
Second image recognition unit 20-3
First vehicle and license plate database 20-4
Second vehicle and license plate database 20-5
Comparison unit 20-6
Parking information database 20-7
Wireless transmission output unit 20-8
Voltage regulation unit 20-9
Temperature control module 20-10
First image acquisition device 30A
Second image acquisition device 40A
Third image acquisition device 30B
Fourth image acquisition device 40B
Wireless communication network 2
Roadside parking billing computing center 3
Parking space database module 3-1
Parking fee calculation module 3-2
Query and issuance module 4
User 5
Roadside parking vehicle 6
Front license plate 61
Rear license plate 62
Parking unit P1 , P2 , P3
Car 7
AI device 70
First image acquisition device 71
Second image acquisition device 72
Third image acquisition device 73
Fourth image acquisition device 74
Display device 75
Powe supply management device 76
Three-button control switch 77

## Claims

1. An AI vehicle (1) with its control system, including:
a motorcycle (10) provided with a battery for motorcycle activation (101), an AI device (20) electrically connected to the battery for motorcycle activation (101), a first image acquisition device (30) electrically connected to the AI device (20), a second image acquisition device (40) electrically connected to the AI device (20), a display device (50) electrically connected to the AI device (20), a heat dissipation device (60) electrically connected to the AI device (20), and a power supply management device (70) electrically connected to the AI device (20);
the AI device (20) and the heat dissipation device (60) being provided in an accommodation cabin (102) of the motorcycle (10), the first image acquisition device (30) and the second image acquisition device (40) being installed on both right and left side of a head (103) of the motorcycle (10) respectively, the display device (50) being provided over a dashboard on the head (103) of the motorcycle (10), the power supply management device (70) being provided in rear container (109) of the motorcycle (10);
the power supply management device (70) at least executing a process of turning on the AI device (20), a process of turning off the AI device (20), and a procedure of charging the battery for motorcycle activation (101);
in executing the process of turning on the AI device (20), a motorcycle electric switch (104) provided with the battery for motorcycle activation (101) being turned on, and a reset switch (701) of the power supply management device (70) being activated to turn on the battery for motorcycle activation (101) to output power to the AI device (20), the first image acquisition device (30), the second image acquisition device (40), the display device (50) and the heat dissipation device (60), as well as a boot process and a system screen being displayed on the display device (50) to complete the turning on of the AI device (20);
in executing the process of turning off the AI device (20), the motorcycle electric switch (104) being turned off, and the AI device (20) entering a shutdown process, after the display device (50) displaying that the shutdown is complete, the reset switch (701) being activated until no output screen being displayed on the display device (50), indicating that the shutdown of the AI device (20) is completed;
in executing the procedure of charging the battery for motorcycle activation (101), a charging selection switch (702) of the power supply management device (70) being activated to a position of a vehicle charging side, such that the power supply management device (70) receives the electric power of the motorcycle generator (105) of the motorcycle (10) to provide powering for an input terminal of the power supply management device (70) as charging of the battery for motorcycle activation (101), and supply the power directly or indirectly required for the AI device (20), the first image acquisition device (30), the second image acquisition device (40), the display device (50) and the heat dissipation device (60) to operate; in addition,
the charging selection switch (702) of the power supply management device (70) can also be activated to a position of an external charging side, such that a bluetooth communication charger (703) of the power supply management device (70) receives AC power from an external power source as the charging of the battery for motorcycle activation (101), to supply the power directly or indirectly required for the AI device (20), the first image acquisition device (30), the second image acquisition device (40), the display device (50) and the heat dissipation device (60) to operate.

2. The AI vehicle with its control system of claim 1, wherein the motorcycle electric switch (104) is further electrically connected with at least a protection device (106), a motorcycle power load (107), a motorcycle voltage and current regulation device (108), and the motorcycle generator (105) is electrically connected to the motorcycle voltage and current regulation device (108).

3. The AI vehicle with its control system of claim 1, wherein the AI device (20) is further electrically connected to a wireless network bridge (router) (202) or the AI device (20) has a built- in 5G Wifi module.

4. The AI vehicle with its control system of claim 3, wherein the wireless network bridge (router) (202) serves as a wireless connection between the AI device (20) and other external peripheral equipment, the external peripheral equipment can be a smart mobile phone (91) or smart glasses (92) as need, with the App installed on the smart mobile (91) phone or provided specifically for smart glasses (92), a linked two-way communication with the AI device (20) is activated, and a real-scene image captured by the camera on the mobile phone or glasses is acquired, transmitted, through WebRTC software or other mobile phone image wireless communication mechanism, to the AI device (20) for an image recognition analysis, followed by providing an analysis recognition result returned to the smart mobile phone (91) or smart glasses (92).

5. The AI vehicle with its control system of claim 1, wherein the AI device (20) is electrically connected to a temperature and voltage detection device (203), the temperature and voltage detection device (203) can conduct a two-way communication with the AI device (20) through a USB port and an interface software, and the temperature and voltage detection device (203) detects the temperature/voltage/current values of the first image acquisition device (30), the second image acquisition device (40), and the display device (50) for comparison with safety factor values set by the AI device (20), and in turn, air intake and air exhausting of the heat dissipation device (60) are driven, such that the accommodation cabin (102) forms a convective airflow to lower down the temperature.

6. The AI vehicle with its control system of claim 1 wherein
a first image acquisition device (30), which is electrically connected to the AI device (20), the first image acquisition device (30) comprising a first image acquisition card (301), the first image acquisition card (301) being installed on a head (103) of the motorcycle (10), and the first image acquisition card (301) being electrically connected with the first image acquisition device (30) through a coaxial cable transmission signal by an analog image signal input terminal, such that a digital image signal output terminal of the first image acquisition device (30) is electrically connected with the AI device (20) by signal transmission through a wire;
a second image acquisition device (40), which is electrically connected to the AI device (20), the second image acquisition device (40) comprising a second image acquisition card (401), the second image acquisition card (401) being installed on a head (103) of the motorcycle (10), and the second image acquisition card (402) being electrically connected with the second image acquisition device (40) through a coaxial cable transmission signal by an analog image signal input terminal, such that a digital image signal output terminal of the second image acquisition device (40) is electrically connected with the AI device (20) by signal transmission through a wire.

7. The AI vehicle with its control system of claim 1 wherein a radar speedometer module (201) is electrically connected to the AI device (20) and installed in a rear container (109) of the motorcycle (10), the radar speedometer module (201) being connected with a RS485 port of the AI device (20) through a UPT signal line, or can be connected with a RS232 port of the AI device (20) via a RS485/RS232 converter, or can be connected with a USB port of the AI device (20) via a RS485/USB converter, the radar speedometer module (201) being capable of cooperating with license plate recognition functions of the image acquisition devices to calculate a speed of each traveling vehicle and a matched license plate number in real time by means of an image analysis algorithm when the motorcycle (10) is on roadside parking.

8. The AI vehicle with its control system as claim 1 wherein a RFID active receiver (205), which is electrically connected to the AI device (20) and installed on a head (103) of the motorcycle (10), the RFID active receiver (205) being connected with a RS485 port of the AI device (20) through a UPT signal line, or can be connected with a RS232 port of the AI device (20) via a RS485/RS232 converter, or can be connected with a USB port of the AI device (20) via a RS485/USB converter, and the RFID active receiver (205) can conduct receiving for ETC/eTag chips on parked vehicles with respect to roadside parking billing when the motorcycle (10) is traveling, and cooperate with license plate recognition functions of the image acquisition devices to calculate a speed of each traveling vehicle and a matched license plate number in real time by means of an image analysis algorithm.

9. The AI vehicle with its control system of claim 1 , wherein the AI device (20) is further electrically connected to a horn/buzzer (204), the horn/buzzer (204) being provided on the display device (50), a trigger/signal amplification function of the horn/buzzer (204) being connected with an amplifier embedded in an image A/D PCB board/touch control panel (501) through a signal control cable for actuation, and the horn/buzzer (204) being connected to a GPIO/RS232 adapter socket of the AI device (20) through a UTP signal line, or converting an analog audio signal into a level drop signal via an embedded audio signal conversion control panel on the AI device (20), connecting to a buzzer by a horn hole line of the AI device (20), and having timing of a reporting mechanism controlled by the AI device (20).

10. The AI vehicle with its control system of claim 1 , wherein the AI device (20) is electrically connected with a three-button control switch (80), the three-button control switch (80) being provided on a handle (110) of the motorcycle (10), and electrically connected with the AI device (20) through a control line, the three-button control switch (80) being a single-circuit switch, a control panel of the three-button control switch (80) being provided in the AI device (20) with a USB port, a first button of the three-button control switch (80) control temporary cutting of powering or cutting of powering for the display device (50) by the AI device (20); a second button of the three-button control switch (80) activating a slow shutdown program action initiated by the AI device (20); a third button of the three-button control switch (80) controlling the first image acquisition device (30) and the second image acquisition device (40) initiated by the AI device (20).

11. The AI vehicle with its control system of claim 1 , wherein a license plate recognition control system for the AI vehicle (1), including:
a motorcycle (10) provided with a battery for motorcycle activation (101), an AI device (20) electrically connected to the battery for motorcycle activation (101), a first image acquisition device (30) electrically connected to the AI device (20), a second image acquisition device (40) electrically connected to the AI device (20), the AI device (20) being provided in an accommodation cabin (102) of the motorcycle (10), the first image acquisition device (30) and
the second image acquisition device (40) being installed on both right and left side of a head (103) of the motorcycle (10) respectively;
the AI device (20) cooperating with the first image acquisition device (30) and the second image acquisition (40) device to perform a computation of a license plate number recognition;
the computation of the license plate recognition including the following steps:
step 1: plate image input, in which at least one plate image is obtained from the first image acquisition device (30) or the second image acquisition device (40) at first and input to the AI device (20);
step 2: license plate detection, in which a position, a size of a plate frame and an inclination angle of characters on a license plate in the plate image are detected based on a neural network plate detection algorithm, and the detected plate is cut out from the plate image;
step 3: rotation correction, in which classification of the inclination angle of characters on the license plate is determined according to the step 2 to perform the rotation correction for the license plate in the plate image, such that texts on the license plate do not overlap as much as possible in a horizontal alignment;
step 4: plate number recognition, in which the plate image after the rotation correction is input into a license plate identification neural network to recognize the plate number.

12. The AI vehicle with its control system of claim 1 , the AI vehicle (1) including a motorcycle (10) provided with a battery for motorcycle activation (101), an AI device (20), a first image acquisition device (30), a second image acquisition device (40), a display device (50), a heat dissipation device (60), a power supply management device (70) and a three-button control switch (80); wherein a power supply and control system of the AI motorcycle (10) includes the power supply management device (70) charged by a motorcycle generator (105) or an external power source, the power supply management device (70) being electrically connected to the AI device (20) and the heat dissipation device (60), the first image acquisition device (30), the second image acquisition device (40), the display device (50) and the three-button control switch (80) being electrically connected to the AI device (20), to provide the power required for operations of the devices by the power supply management device (70).

13. The AI vehicle with its control system of claim 12 , wherein an image signal and micro- control system of the AI motorcycle (10) including an AI device (20), which is connected to the first image acquisition device (30), the second image acquisition device (40), the display device (50), the three-button control switch (80) and the power supply management device (70) by signal lines to transmit information and control operations of the devices.

14. The AI vehicle with its control system of claim 1 , wherein an active recognition control system of the AI motorcycle (10) has a Wifi AP antenna (90) mounted on the AI motorcycle (10), linking to a smart mobile phone (91) or a pair of smart glasses (92) in a manner of wireless communication for transmission of plate images and face images acquired by the equipment to the AI device (20), to perform a license plate number recognition or a face recognition, followed by returning recognition results to the smart mobile phone (91) or the pair of smart glasses (92).

15. The AI vehicle with its control system of claim 1, wherein the AI device (20) is linked to a remote database for information update, wherein the AI device (20) is connected to a public network (PI) of a government department or logs in to, for example, a police cloud database (PW) through a data network, or updates relevant recognition information by connecting to a police database terminal through a wireless network.

16. The AI vehicle with its control system of claim 15 , wherein the AI device (20) is connected to a public network (PI) or an optical fiber network of a government department through a WAP with a data network of an ISP telecommunication base (TU) for login to, for example, a police cloud database (PW) to update relevant recognition information; the AI device (20) is connected to a network HUB (210) through a wireless network for connection to a police database terminal for updating relevant recognition information; the AI device (20) can further have a 4G/5G communication module (206) disposed, thereby a wireless base station of regional telecommunication operator (WB) is connected through 4G/5G communication, or further, a public network (PI) or an optical fiber network of a government department is connected with a data network, for login to a police cloud database (PW) to update relevant recognition information.

17. The AI vehicle with its control system of claim 16 , wherein the AI device (20) is provided with a scratch pad memory (209), a software storage hard disk (207) and a data storage hard disk (208), by which installation for running program is available and recognition images are stored.

18. An AI vehicle with its control system thereof, which includes: a motorcycle (10);
an AI device (20) provided in an accommodation cabin (102) of the motorcycle (10);
a first image acquisition device (30A), which is provided on a right side front end of a head (103) of the motorcycle (10) for acquiring a vehicle body image and a rear license plate number of a vehicle in a parking space on a right side;
a second image acquisition device (40A), which is provided on a left side front end of the head (103) of the motorcycle (10) for acquiring a vehicle body image and a rear license plate number of a vehicle in a parking space on a left side;
a third image acquisition device (30B), which is provided on a right side rear end of the accommodation cabin (102) of the motorcycle (10) for acquiring a vehicle body image and a front license plate number of the vehicle in the parking space on the right side;
a fourth image acquisition device (40B), which is provided on a left side rear end of the accommodation cabin (102) of the motorcycle (10) for acquiring a vehicle body image and a front license plate number of the vehicle in the parking space on the left side;
a display device (50), which is provided at a location of the head (103) of the motorcycle (10); a power supply management device (70), which is provided in a rear container (109) of the motorcycle (10); and
an three-button control switch (80), which is disposed on a lower side of a left handle (110) of the motorcycle (10);
the AI device (20), the first imagine acquisition device (30A), the second image acquisition device (40A), the third image acquisition device (30B), the fourth image acquisition device (40B), the display device (50), the power supply management device (70) and the three-button control switch (80) are electrically connected with each other.

19. The AI vehicle with its control system of claim 18 further comprising a left/right camera switch (801) provided at a lower left location of the head (103) of the motorcycle (10), a Wifi AP antenna (90) provided on a top surface of a housing of the power supply management device (70), a voltage and current requlation device (108) provided on the head (103) of the motorcycle (10), an embedded buzzer (204) provided on the head (103) of the motorcycle (10); wherein, the AI device (20) is an Nvidia GPU card or Intel VPU card for high-speed image calculation installed in an industrial computer, the image acquisition device have a camera and a spotlight, respectively, the display device (50) can be a touch screen, the three-button control switch (80) comprises a first control button for power control of the image acquisition devices or input acquisition of images, a second control button for controlling the display device (50), a third control button for controlling the AI device (20), the power supply management device (70) being used for supplying power to the equipments mentioned above.

20. The AI vehicle with its control system of claim 18 , wherein the AI device (20) comprises a processing unit (20-1), a first image recognition unit (20-2), a second image recognition unit (20-3), a first vehicle and license plate database (20-4), a second vehicle and license plate database (20-5), a comparison unit (20-6), a parking information database (20-7), a wireless transmission output unit (20-8), a voltage regulation unit (20-9) and a temperature control module (20-10).

21. The AI vehicle with its control system of claim 20, in which a rear plate image and a vehicle body image of the vehicle in the parking space on the right side are acquired by the first image acquisition device (30A), which are input into the first image recognition unit (20-2), followed by being input into the first vehicle and license plate database (20-4); then a front plate image and a vehicle body image of the vehicle in the parking space on the right side are acquired by the third image acquisition device (30B), input into the second image recognition unit (20-3), followed by being input into the second vehicle and license plate database (20-5), and then the front, rear plate numbers and vehicle models are input by the databases to the comparison unit (20-6) for comparison.

22. The AI vehicle with its control system of claim 21 , in which a rear plate image and a vehicle body image of the vehicle in the parking space on the left side are acquired by the second image acquisition device (40A), which are input into the first image recognition unit (20-2), followed by being input into the first vehicle and license plate database (20-4); then a front plate image and a vehicle body image of the vehicle in the parking space on the left side are acquired by the fourth image acquisition device (40B), input into the second image recognition unit (20-3), followed by being input into the second vehicle and license plate database (20-5), and then the front, rear plate numbers and vehicle models are input by the databases to the comparison unit (20-6) for comparison.

23. The AI vehicle with its control system of claim 21 or 22, wherein a result of a comparison from the comparison unit (20-6) is input into the processing unit (20-1) for plate number amending with algorithm or quantity amending with algorithm if the result is no.

24. The AI vehicle with its control system of claim 21 or 22, wherein parking information is stored in the parking information database (20-7), and the parking information is uploaded via the wireless transmission output unit (20-8) provided with a wireless communication module if a result of a comparison from the comparison unit (20-6) is Yes; the parking information comprises a license plate number, a parking unit number, a parking space longitude/latitude, vehicle entry time, exit time, parking duration.

25. The AI vehicle with its control system of claim 18, the AI vehicle (1) operating cooperatively with a roadside parking billing computing platform, the parking information being uploaded to a parking space database module (3-1) of a roadside parking billing computing center (3) via a wireless communication network (2) by the wireless transmission output unit (20-8), followed by calculating a parking fee via a parking fee calculation module (3-2), and then transmitting the parking fee information to a user (5) by a query and issuance module (4), the user (5) comprising a parking fee toll and a driver.

26. The AI vehicle with its control system of claim 25, the vehicle in roadside parking can be a car or a motorcycle, the roadside parking space can be a car parking space or a motorcycle parking space, the parking billing time interval can be every hour, every half hour, or every count of billing.

27. The AI vehicle with its control system of claim 18, the AI vehicle (1) can operate cooperatively with a parking space management platform to upload parking information stored in the parking information database (20-7) to a parking space database module of a parking space management platform, and real-time free parking space information being recorded, provided to drivers with real-time transmission for quick query of available roadside parking spaces by a parking space management computing module.

28. The AI vehicle with its control system of claim 18 wherein the vehicle is an automobile, which includes :
a car (7);
an AI device (70) provided in a rear compartment of the car (7);
a first image acquisition device (71), which is provided on a right side vehicle body of a hood at the front of the car (7) for acquiring a vehicle body image and a rear plate number of a vehicle in a parking space on a right side;
a second image acquisition device (72), which is provided on a left side vehicle body of the hood at the front of the car (7) for acquiring a vehicle body image and a rear plate number of a vehicle in a parking space on a left side;
a third image acquisition device (73), which is provided on a right side vehicle body of the rear compartment at the rear of the car (7) for acquiring a vehicle body image and a front plate number of the vehicle in the parking space on the right side;
a fourth image acquisition device (74), which is provided on a left side vehicle body of the rear compartment at the rear of the car (7) for acquiring a vehicle body image and a front plate number of the vehicle in the parking space on the left side;
a display device (75), which is provided at an appropriate location on a driving console of the car (7);
a power supply management device (76), which is provided in the rear compartment of the car (7); and
a three-button control switch (77), which is provided at an appropriate location on the driving console of the car (7);
the AI device (70), the first image acquisition device (71), the second image acquisition device (72), the third image acquisition device (73), the fourth image acquisition device (74),
the display device (75), the power supply management device (76) and the three-button control switch (77) are electrically connected with each other.
